(19) Europäisches Patentamt
European Patent Office
Office européen des brevets

(11) **EP 2 047 295 B1**

(12) **EUROPÄISCHE PATENTSCHRIFT**

(45) Veröffentlichungstag und Bekanntmachung des Hinweises auf die Patenterteilung:
**25.02.2015 Patentblatt 2015/09**

(21) Anmeldenummer: **07765469.7**

(22) Anmeldetag: **18.06.2007**

(51) Int Cl.:
*G01T 1/29* (2006.01)    *G01T 1/167* (2006.01)

(86) Internationale Anmeldenummer:
**PCT/EP2007/056022**

(87) Internationale Veröffentlichungsnummer:
**WO 2008/009528 (24.01.2008 Gazette 2008/04)**

(54) **DETEKTORANORDNUNG ZUR WINKELAUFLÖSENDEN DETEKTION VON STRAHLUNG UND VERFAHREN ZUM BETRIEB DESSELBEN**

DETECTOR ASSEMBLY FOR DETECTING RADIATION WITH ANGULAR RESOLUTION AND METHOD FOR OPERATING SAID ASSEMBLY

ENSEMBLE DÉTECTEUR DESTINÉ À LA DÉTECTION À RÉSOLUTION ANGULAIRE DE RAYONNEMENT ET PROCÉDÉ POUR FAIRE FONCTIONNER CET ENSEMBLE DÉTECTEUR

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **20.07.2006 DE 102006033661**

(43) Veröffentlichungstag der Anmeldung:
**15.04.2009 Patentblatt 2009/16**

(73) Patentinhaber: **GSI Helmholtzzentrum für Schwerionenforschung GmbH
64291 Darmstadt (DE)**

(72) Erfinder:
• **KRAFT, Gerhard
64291 Darmstadt (DE)**
• **ENGHARDT, Wolfgang
01454 Radeberg (DE)**
• **WÜRSCHIG, Thomas
01237 Dresden (DE)**

(56) Entgegenhaltungen:
DE-A1- 10 318 416    US-A- 3 539 806
US-A- 4 415 808    US-A- 5 880 469

• NARANJO B ET AL: "Observation of nuclear fusion driven by a pyroelectric crystal" Nature Nature Publishing Group UK, Bd. 434, Nr. 7037, 28. April 2005 (2005-04-28), Seiten 1115-1117, XP002447222 ISSN: 0028-0836 in der Anmeldung erwähnt

**Beschreibung**

Die vorliegende Erfindung betrifft eine Detektoranordnung zur winkelauflösenden Detektion von Strahlung.

Heutzutage wird Strahlung verschiedenster Art, wie beispielsweise Alpha-, Beta-, Gammastrahlung oder Teilchen, wie Elektronen, Neutronen, Ionen oder Atomkerne zur Untersuchung von Materialproben verwendet. Entsprechende Untersuchungen mit Strahlung finden beispielsweise Anwendung bei der Lokalisierung und Identifizierung von Gefahrstoffen, wie zum Beispiel verborgenen Sprengstoffen, aber auch in der Medizintechnik in Verbindung mit bildgebenden Verfahren, in der Strahlungsmesstechnik oder in der Forschung zu Strukturuntersuchungen von Materialien. Dabei sind insbesondere Strahlungsdetektoren notwendig, die es erlauben, die Einfallsrichtung oder den Entstehungsort der zu detektierenden Strahlung festzustellen.

Bei bislang eingesetzten Verfahren erfolgte beispielsweise zunächst eine Kollimation von einfallender, zu detektierender Strahlung durch Loch- oder Lamellenkollimatoren vor dem eigentlichen Detektormaterial. Gewöhnlich ist ein entsprechender Lochkollimator aus einer Platte eines Materials mit hoher Ordnungszahl, wie beispielsweise Blei, Wolfram, Eisen oder Messing aufgebaut, die mit einer Vielzahl von Bohrungen mit kleinem Durchmesser versehen ist. So können zum Beispiel nur die den entsprechenden Kollimator durchlaufende Gammastrahlen anschließend durch einen Detektor erkannt werden.

Dabei ist insbesondere bei hohen Strahlungsenergien vor allem eine geringe Sensitivität des Detektors von Nachteil, da bei der Auswertung nur die zu den Achsen der Bohrungen parallel oder unter einem kleinen Öffnungswinkel einfallenden Gammastrahlen verwendet werden sollen. Deshalb muss die Wandstärke zwischen den Kollimatorbohrungen immer größer sein als die Absorptionslänge der zu detektierenden Strahlung. Insbesondere bei Photonen mit Energien von über 200 keV kann die erforderliche Wandstärke zwischen den Kollimatorbohrungen die Durchmesser der Bohrungen übersteigen. Dann wird die Transmission, d.h. die Querschnittsfläche aller Kollimatorbohrungen im Verhältnis zu der gesamten Stirnfläche (Vorderseite) des jeweiligen Detektors, gering: Die absorbierende Querschnittsfläche übersteigt dann sogar die durchlässige Fläche des Kollimators. Je höher die Energie der zu detektierenden Teilchen oder Strahlung ist, desto ungünstiger wird die Transmission und umso kleiner die Ansprechwahrscheinlichkeit des jeweiligen Detektors. Dies gilt insbesondere für höher energetische Gammastrahlung. Neben den vorgenannten kollimatorbasierten Detektoren sind auch kollimationslose richtungsdetektierende Detektionsverfahren bekannt: die Compton-Kamera oder die Positronenkamera bei der Positron-Emissions-Tomographie (PET).

Bei dem Prinzip der Compton-Kamera wird anstelle der vorgenannten mechanischen Kollimation eine elektronische Kollimation zur Bestimmung der Richtung von auf das entsprechende Detektorsystem einfallender Strahlung durchgeführt. Ein in eine Compton-Kamera einfallendes Strahlungs-Photon durchläuft dabei zunächst einen ersten Streudetektor, in dem eine Compton-Streuung erfolgt. Wenn der Streudetektor granular ausgeführt ist, wird der Ort der Wechselwirkung erkannt. In einem zweiten, beabstandeten, Absorptionsdetektor wird das gestreute Photon vollständig gestoppt, wobei der Ort und die Energie registriert werden können. Wenn die beiden Streuereignisse im Streudetektor und Absorptionsdetektor koinzident nachgewiesen werden, lässt sich der Ort der Strahlungsquelle, welche das Photon abgegeben hat, auf einen Kegelmantel mit der Spitze am Ort des Streudetektors rekonstruieren. Mittels geeigneter tomografischer Rekonstruktionsalgorithmen kann der Ort der Strahlungsquelle bestimmt werden. Dieses Prinzip wird vor allem in der Astrophysik zur Messung von Gammastrahlungsquellen mit Photonenenergien bis zu 30 MeV eingesetzt.

Ein Nachteil besteht darin, dass der Streudetektor sehr dünn sein muss, damit höchstens eine Compton-Wechselwirkung in ihm stattfindet. Dadurch sinkt jedoch grundsätzlich die Wechselwirkungswahrscheinlichkeit in dem Detektor. Ferner muss eine vollständige Energiedeposition der Photonenenergie in dem Absorptionsdetektor gewährleistet sein, was in realen Detektorsystemen immer nur für einen Teil der auftreffenden Photonen erreicht wird. Dadurch wird die Effizienz der Compton-Kamera gesenkt.

In der deutschen Offenlegungsschrift DE 103 18 416 A1 wird eine Abstandsmessvorrichtung für eine Gammastrahlquelle vorgeschlagen, die eine Mehrzahl von entlang einer normal zur einfallenden Gammastrahlung angeordneten Detektionsplatten aufweist. Ein Abstand zu der Gammastrahlquelle wird basierend auf der Anzahl der von jeder Detektionsplatte detektierten, gezählten Strahlung und dem jeweiligen Intervallabstand der Detektionsplatten geschätzt. Außerdem wird die Richtung der Quelle des Strahls basierend auf jedem von jeder Detektionsplatte erhaltenen Bild geschätzt.

In der Druckschrift US 5,880,469 wird eine Vorrichtung und ein Verfahren vorgeschlagen, mit denen Neutronen, die von einer anderen als einer bevorzugten Richtung her einfallen, von solchen, die von einer bevorzugten Richtung her einfallen, unterschieden werden können. Weiterhin kann einfallende Gammastrahlung von einfallender Neutronenstrahlung unterschieden werden. Hierzu werden zwei parallel zueinander angeordnete Photomultiplier-Röhren verwendet, die am Ende eines Lichtleiters angeordnet sind. Am anderen Ende des Lichtleiters ist ein Neutronen-Szintillationsmaterial angeordnet. Das Szintillationsmaterial weist optische Fasern auf, die benachbart zu einer ersten Richtung angeordnet sind, die senkrecht zu einer Längserstreckung der optischen Fasern steht, wobei die optischen Fasern abwechselnd als optische Fasern, die Photonen in einem unteren Energiebereich des elektromagnetischen Spektrums und optische Fasern, die Photonen in einem oberen Bereich des elektromagnetischen Spektrums aussenden, ausgebildet sind.

Ein besonderes Einsatzgebiet von richtungsauflösenden Detektoren stellt das Auffinden von Sprengstoffen, beispielsweise Landminen in freiem Gelände oder versteckten Sprengstoffen in Reisegepäck oder Frachtgütern dar.

Sprengstoffe weisen im Allgemeinen eine hohe Konzentration von Stickstoffverbindungen auf. Die Erkennung dieser Stickstoffanhäufungen muss meist im Umfeld anderer leichterer Atome, wie beispielsweise organischer Verbindungen und Plastik, Sand oder Erde stattfinden, die im Falle von Landminen Teil des Erdbodens sind oder die den Hauptbestandteil des zu untersuchenden Behälters bilden. Diese Materialien weisen vorwiegend leichte Elemente, wie Kohlenstoff (C), Stickstoff (N), Sauerstoff (O), Fluor (F), Silizium, (Si), Magnesium (Mg) usw. auf, welche bei Neutronenanregung (Aktivierung mit Neutronen) hochenergetische Gamma-Quanten bzw. Gammastrahlung emittieren. Üblicherweise werden zum Beispiel an Flughäfen Transmissionsröntgengeräte zur Gepäckkontrolle eingesetzt. Dabei wird jedoch kein elementspezifisches Signal ermittelt, sondern Sprengsätze nur aufgrund ihrer Form im Durchleuchtungsbild detektiert.

Für die Detektion von Landminen im Erdboden wurden Röntgenrückstreudetektoren und Verfahren, die Neutronen einsetzen, vorgeschlagen, wie beispielsweise in "Detection of buried landmines and hidden explosives using neutron, X-ray and gamma-ray probes", G. Nebbia und J. Gerl in europhysics news, July/August 2005, Seite 119 ff. Dabei werden zum Beispiel rückgestreute Neutronen oder Gamma-Quanten aus dem Neutroneneinfang mit Szintillationszählern gemessen. Dabei sind in der Regel großvolumige dicht über dem Boden zu bewegende Detektoranordnungen notwendig. Die Richtung der beispielsweise durch Neutronenaktivierung erzeugten Gamma-Quelle bezüglich des Detektionssystems über dem Erdboden ist dabei nicht zu ermitteln.

Ein weiteres Problem besteht darin, von einem gemessenen Intensitätsspektrum einzelne Emissionslinien zu identifizieren, die beispielsweise für Stickstoff oder andere charakteristische Material- oder Elementekompositionen charakteristisch sind, um das Vorliegen von Sprengstoff zu detektieren. Dies erfordert nachteilig eine energieauflösende Spektroskopie mit hoher Energieauflösung. Dies bedingt einen großen apparativen Aufwand und führt zu einer geringeren Ansprechwahrscheinlichkeit des entsprechenden Detektors.

Es ist daher eine Aufgabe der vorliegenden Erfindung eine verbesserte Detektoranordnung zu schaffen, die eine winkelauflösende Detektion von Strahlung ermöglicht. Es ist eine weitere Aufgabe der Erfindung, aus der ortsauflösend detektierten Strahlung das Vorliegen vorgegebener Materialien zu bestimmen.

Diese Aufgabe wird durch eine Detektoranordnung mit den Merkmalen des Patentanspruchs 1 gelöst.

Erfindungsgemäß ist eine Detektoranordnung zur winkelauflösenden Detektion von Strahlung mit einer Auswerteeinrichtung und mindestens einem Detektorelement vorgesehen, wobei das Detektorelement eine Vorderseite und eine Rückseite, ein erstes aktives Detektormaterial und ein zweites Material zwischen der Vorderseite und der Rückseite aufweist. Das zweite Material kann als aktives Detektormaterial oder als passives Material ausgeführt sein. Dabei ist ein Raum zwischen der Vorderseite und der Rückseite des Detektorelements von mehreren durchgängigen Bereichen aus dem ersten aktiven Detektormaterial und mindestens einem durchgängigen Bereich aus dem zweiten Material ausgefüllt, und jeder Bereich verbindet die Vorderseite mit der Rückseite des Detektorelements. Die Bereiche sind derart angeordnet, dass jeder Bereich aus dem ersten aktiven Detektormaterial an mindestens einen Bereich aus dem zweiten Material grenzt. Erfindungsgemäß erfolgt eine Energiedeposition in zumindest den Bereichen aus dem ersten aktiven Detektormaterial in Abhängigkeit von einem Einstrahlungswinkel der Strahlung auf das Detektorelement. Die Detektoranordnung umfasst zumindest eine Auswerteeinrichtung, die dazu eingerichtet ist, aus den in den aktives Detektormaterial aufweisenden Bereichen des Detektorelements deponierten Energien sowie der Verteilung der in den aktives Detektormaterial aufweisenden Bereichen des Detektorelements deponierten Energien den Einstrahlungswinkel zwischen der Strahlung auf das Detektorelement und einer Vorzugsrichtung des Detektorelements zu ermitteln.

Unter (Detektor-)Material wird im Folgenden ein beliebiges Material verstanden, welches die jeweilige geometrische Form der ersten und/oder zweiten Bereiche des Detektorelementes ausfüllt. In bestimmten Ausführungsformen der Erfindung weist das jeweilige erste und/oder zweite (Detektor-)Material vorgegebene physikalische Eigenschaften, wie zum Beispiel Absorptionseigenschaften hinsichtlich bestimmter Strahlung, Szintillatoreigenschaften oder Ähnliches, auf. Vorzugsweise ist eines dieser (Detektor-)Materialien ein aktives Material, welches ein Signal liefert, zum Beispiel Szintillationslicht, wenn es von einem Gamma-Quant getroffen wird. Das jeweils andere (Detektor-)Material kann dann ebenfalls ein aktives Material aufweisen, oder als passives Material, also Absorbermaterial für die in Frage kommende Strahlung oder Quanten wirken, und im letzteren Fall bei Eintreffen von Strahlung kein Signal liefern.

Durch die das Detektorelement begrenzende Oberflächen oder Wände in das Detektorelement einfallende Photonen wechselwirken mit allen in dem Detektorelement vorliegenden Teilchen bzw. Materialien. Dabei geben die Photonen, zum Beispiel hochenergetische Gamma-Quanten, ganz, meist aber teilweise ihre Energie ab und erzeugen Elektronen unter Anderem durch den Compton-Effekt. Diese Elektronen werden in allen Eindringtiefen der Photonen erzeugt und mit zunehmender Photonenenergien nach vorne, also in Richtung der jeweiligen einfallenden Photonen, emittiert. Durch weitere Streuungen dieser primären Elektronen mit den Elektronen des jeweiligen (Detektor-)Materials wird die Energie in das Detektorelement übertragen. Bei diesen Streuprozessen dominiert die ursprüngliche (Vorwärts-)Richtung der auf das Detektorelement einfallenden Photonen, welche durch die Trajektorie des jeweiligen primären Photons gegeben ist.

Bei einem frontalen Einfall auf die Vorderseiten des Detektorelements ist es möglich, dass das einfallende Photon seine gesamte oder den größten Teil seiner Energie durch eine Kaskade von sekundären Streuungen in einem einzelnen der Bereiche des Detektorelementes deponiert. Die Anordnung der Bereiche mit verschiedenen (Detektor-)Materialien gibt daher eine Vorzugsrichtung vor. Somit erfolgt eine Kollimation von durch die Vorderseite in das Detektorelement eintretenden Photonen durch die (Detektor-)Materialien selbst innerhalb des erfindungsgemäßen Detektorelementes. Die Kollimation hängt dabei von der Geometrie der Bereiche ab. Der Einstrahlungswinkel kann beispielsweise bezüglich der Vorderseite, Vorzugsrichtung der Bereiche oder anderer geeigneter ausgezeichneter Richtungen definiert werden.

In einer Ausführungsform der erfindungsgemäßen Detektoranordnung sind die Bereiche als Schichten aus dem ersten aktiven Detektormaterial und dem zweiten Material ausgebildet. Es ergeben sich somit abwechselnd Schichten aus dem ersten aktiven Detektormaterial und dem zweiten Material, wobei durch die Schichtebenen in Richtung der Vorderseite des Detektorelements eine Vorzugsebene definiert werden kann. Die Vorzugsebene in Richtung durch die Vorderseite aus dem Detektorelement heraus stellt dann eine Vorzugsrichtung des Detektorelementes dar. Im Folgenden werden die Begriffe Strahlung, Quanten und Teilchen, welche von der Detektoranordnung zu erfassen sind, synonym miteinander verwendet. Vorzugsweise findet die Erfindung Anwendung bei der Detektion von hochenergetischer Gammastrahlung.

Ist die Gamma-Quanten-Vorwärtsrichtung und die sich durch die Laminierung in Schichten ergebende Vorzugsrichtung des Detektorelementes in einer Ebene (kollinear), d. h. der Detektor zeigt mit seiner Vorderseite auf die Strahlungsquelle, werden die sekundären Elektronen in die Richtung der jeweiligen Platten- bzw. Schichtenebenen emittiert. Dann treffen diese Sekundärelektronen mit geringer Wahrscheinlichkeit auf die jeweiligen Ober- oder Unterseiten der Platten, wo sie den jeweiligen Bereich des Detektorelementes verlassen und gegebenenfalls in dem anderen (Detektor-)Material absorbiert werden. Das bedeutet, dass die sekundären Elektronen eine große Chance oder Wahrscheinlichkeit besitzen, ihre volle Energie in dem (Detek-tor-)Material einer Platte bzw. eines einzelnen Bereiches abzugeben. In diesem Fall entspricht ein durch das (aktive) Detektormaterial erzeugtes Signal der vollen Energie der Elektronen. Somit ergibt sich beispielsweise eine durch eine Compton-Verteilung vorgegebene Spektralform.

Falls ein Gamma-Quant durch die Vorderseite in einem Winkel zu einer Schichtebene eintritt, finden in der Einfallsrichtung Depositionsprozesse in mehreren Bereichen beziehungsweise Schichten statt. Die Energiedeposition durch Sekundärelektronen in einem einzelnen der (Detektor-)Materialien hängt daher stark von dem Winkel des eintreffenden Teilchens bezüglich der Schichtebene ab. Daher lässt sich mit der erfindungsgemäßen Detektoranordnung zumindest ein Winkel zwischen einer durch die Form der Bereiche vorgegebenen Vorzugsebene und der durch die Verbindung zwischen Detektorelement und Strahlungsquelle vorgegebenen Richtung ableiten. Mit einem weiteren Detektorelement kann ferner ein zweiter Winkel bestimmt werden. Prinzipiell kann daher ausgehend von der Position der Detektoranordnung ein Azimut- und ein Polarwinkel zum ermitteln der Richtung der Strahlungsquelle berechnet werden.

In einer bevorzugten Ausführungsform sind zumindest die Bereiche aus dem ersten aktiven Detektormaterial aus einem Polyeder oder einem Zylinder mit einer Grundfläche und einer Höhe gebildet, wobei die Grundflächen an die Vorder- und Rückseite des Detektorelementes grenzen. Vorzugsweise sind die Polyeder als Prismen ausgebildet. In dieser Ausführungsform lässt die erfindungsgemäße Detektoranordnung nicht nur eine Vorzugsebene für die Erkennung von Strahlung zu, sondern es kann eine Vorzugsrichtung definiert werden, die der Symmetrieachse der Polyeder oder Zylinder in Richtung der Vorderseite entspricht.

Vorzugsweise weist das erste aktive Detektormaterial ein Szintillatormaterial auf, welches bei einem Photonendurchgang ein erfassbares Signal liefert. Bevorzugt wirken die Bereiche aus dem zweiten Material für das Detektorelement durchlaufende Strahlung oder Teilchen absorbierend. Es werden also für die zweiten Bereiche reine Absorbermaterialien eingesetzt. Das zweite Material kann beispielsweise Eisen, Luft, Blei und/oder Aluminium aufweisen.

Teilchen, die mit einem Winkel, der größer als ein Grenzwinkel ist, bezüglich der Vorzugsebene oder Vorzugsrichtung in das Detektorelement einfallen, deponieren beispielsweise abwechselnd einerseits Energie in szintillierendem aktiven Detektormaterial, wobei die Energie als Licht erfasst werden kann, und andererseits in absorbierendem Material. Die integrale Energiedeposition für zu detektierende Strahlung oder Teilchen bestimmter Energie hängt daher stark von dem Einfallswinkel gegenüber der Vorzugsebene oder Richtung ab.

In einer Weiterbildung der Erfindung weist auch das zweite Material Szintillatormaterial auf. Ein derartiger "verzahnter Detektor" hat in den ersten Bereichen ein aktives Detektormaterial und in den zweiten Bereichen ein aktives Detektormaterial, wobei diese getrennt auslesbar sind. Wechselseitig wirken die aktiven Detektormaterialien für die jeweils anderen Bereiche als Absorber.

Bevorzugt wird für das erste aktive Detektormaterial und/oder für das zweite Material Szintillatormaterial als aktives Detektormaterial verwendet. Falls beide Bereiche unterschiedliche oder auch gleiche aber getrennt auslesbare Szintillatormaterialien aufweisen, ist eine verbesserte Richtungs- oder Winkelauflösung durch eine koinzidente Auswertung der in den beiden Materialien deponierten Energie möglich.

In einer Weiterbildung der erfindungsgemäßen Detektoranordnung weist das Detektorelement eine, vorzugsweise energieauflösende, Lichtmesseinrichtung auf, welche rückseitig zumindest an die Bereiche des ersten aktiven Detektormaterials gekoppelt ist und welche Szintillationslicht erfasst. Vorzugsweise erfasst die Lichtmesseinrichtung dabei integral das Szintillationslicht aller Bereiche des ersten aktiven Detektormaterials. Eine Lichtmesseinrichtung, beispielsweise ein Photomultiplier, oder auch eine andere Signalanalyseeinrichtungen, misst somit die in den szintillierenden Bereichen deponierte Energie. Es kann somit ein Impulshöhenspektrum der deponierten Energie ermittelt werden. Da sich bei unterschiedlichen Einstrahlungsrichtungen der Gamma-Quanten bezüglich der Vorzugsrichtung des Detektorelementes die Zählraten für deponierte hohe Energien und niedrige Energien verschieden verhalten oder ändern, lässt sich der Winkel oder die Richtung der entsprechenden Strahlungsquelle, bezüglich dem Detektorelement ableiten, wobei das Detektorelement in Schritten um kleine Winkel geschwenkt wird.

In einer alternativen Ausführungsform bilden die Bereiche aus dem ersten aktiven Detektormaterial und/oder zweiten Material jeweils einen Halbleiterdetektor aus, wobei elektrische Signale auslesbar sind. Sind Bereiche als Halbleiterdetektor ausgeführt, erzeugt die eintreffende Photonenstrahlung freie Ladungsträger, welche als schnelle elektrische Signale ausgewertet werden können. Werden Halbleiterdetektoren verwendet, ist keine zusätzliche Lichtmesseinrichtung notwendig.

Vorzugsweise ist das Detektorelement um mindestens eine Schwenkachse schwenkbar angeordnet, wobei die Schwenkachse im Wesentlichen senkrecht zu einer Verbindung zwischen der Vorderseite und der Rückseite verläuft. Somit lässt sich durch Schwenken des Detektorelements die Vorzugsebene oder -Richtung des Detektorelements direkt auf eine Strahlungsquelle richten. Wird das Detektorelement zum Beispiel gegenüber einer Verbindungslinie zwischen der Gamma-Quelle und beispielsweise dem Schwerpunkt des Detektorelementes nach oben oder unten (um einen Polarwinkel) geschwenkt oder nach rechts oder links (um einen Azimutwinkel) geschwenkt, ändern sich die Bedingungen für die Energiedeposition der sekundären Elektronen, deren Bewegungsebene aus der Schwenkrichtung herausläuft, in den Bereichen des Detektorelementes. Dabei kann zum Beispiel eine Laminierung in Schichten unterschiedlicher (Detektor-)Materialien in waagerechter Ebene, also mit dem Polarwinkel n vorliegen.

Vorzugsweise sprechen die aktiven Detektormaterialien auf Gammastrahlen, insbesondere in einem Energiebereich, in dem die Absorption der Gammastrahlung durch den Compton-Effekt dominiert wird, an. In einem Energiebereich von 500 keV bis etwa 10 MeV dominiert der Compton-Effekt als Wechselwirkung der in den Detektor einfallenden Strahlung mit dem aktiven Detektormaterial. Der maximale Energieübertrag erfolgt bei Streuungen, in denen das Gamma-Quant und das Compton-Elektron im Wesentlichen in dieselbe Richtung fliegen. Entsprechende Gamma-Energien ergeben sich unter Anderem bei der Aktivierung von Materialproben mit Neutronen. Dabei wird das zu untersuchende Material mit Neutronen beschossen und emittiert dann Gamma-Quanten.

In einer Weiterbildung der erfindungsgemäßen Detektoranordnung ist daher eine Neutronenquelle zum Einstrahlen von Neutronen auf einer Materialprobe vorgesehen.

Beispielsweise erzeugt die Neutronenquelle mittels Alphastrahlung die Neutronen. Üblicherweise werden Berylliumkerne mit Alphateilchen beschossen, welche in Kohlenstoff und Neutronen zerfallen. Dabei entstehen Neutronen in einem kontinuierlichen Spektrum bis etwa 14 MeV.

Bevorzugt erzeugt die Neutronenquelle Neutronen mittels beschleunigter Protonen, Deuteronen, Helium-Ionen, Alphateilchen oder Tritonen, welche auf ein Target geschossen werden.

In einer weiteren bevorzugten Ausführungsform weist die Neutronenquelle einen piezoelektrischen Kristall auf. Durch pyroelektrische Eigenschaften aufweisende Piezoelektrika ist es beispielsweise möglich, hohe Spannungen zur Erzeugung von Deuteriumkernen zu erzeugen, die auf ein Deuterium-haltiges Target geschossen werden. Bei der entsprechenden Kernreaktion entstehen ${}^3$He, Neutronen, Elektronen und Gammastrahlung. Eine entsprechende Neutronenquelle ist sehr klein ausführbar und wurde beispielsweise in nature 434, 1115-1117 (28 April 2005): "Oberservation of nuclear fusion driven by a pyroelectric crystal" B. Narnajo et al. beschrieben.

Vorzugsweise ist die Neutronenproduktion durch die Neutronenquelle ferner steuerbar.

In einer weiteren Ausführungsform ist eine Anregungsstrahlungsquelle vorgesehen, die derart eine Materialprobe bestrahlt, dass in der Materialprobe Kernreaktionen erzeugt werden. Denkbar ist zum Beispiel ein kleiner Protonen-Beschleuniger.

In einer Weiterbildung der Erfindung weist die Detektoranordnung mehrere Detektorelemente auf, wobei die Detektorelemente derart um eine Position einer Materialprobe angeordnet sind, dass die Vorderseiten einen nicht verschwindenden Winkel zueinander aufweisen. Dieser Winkel zwischen den Vorderseiten kann zum Beispiel größer als 180° gewählt sein, wenn eine große Fläche abgerastert werden soll (divergente Kollimation). Denkbar ist auch, dass der Winkel kleiner als 180° eingestellt wird, wenn ein einzelner Gegenstand zu analysieren ist (konvergente Kollimation).

In diesem Fall ist ein Schwenken eines Detektorelementes nicht notwendig, da sich durch die zueinander gedrehten Positionen der Vorderseiten bzw. Vorzugsrichtungen der Detektorelemente verschiedene Einfallsrichtungen der Gamma-Quanten derselben Quelle ergeben. Beispielsweise lassen sich derart die Vorzugsrichtungen der Ebenen der Detektorelemente um eine Materialprobe positionieren, dass eine tomografische Aufnahme möglich wird. Insbesondere bietet sich die Anwendung tomografischer Rekonstruktionsverfahren an.

Vorzugsweise ist zudem eine Auswerteeinrichtung vorgesehen, welche an die Bereiche des Detektorelements und/oder die Lichtmesseinrichtung gekoppelt ist und welche Signale auswertet. Dabei erfasst die Auswerteeinrichtung bevorzugt eine Verteilung der in den aktiven Detektormaterialien deponierten Energien bzw. ein Energiespektrum.

Mit der vorgeschlagenen Detektoranordnung kann ein Verfahren zum winkelauflösenden Detektieren von Strahlung durchgeführt werden, welches die folgenden Verfahrensschritte aufweist:

a) Aufnehmen eines Spektrums der in dem ersten aktiven Detektormaterial deponierten Energie in einem ersten Energiebereich;

b) Schwenken des Detektorelementes um mindestens einen Schwenkwinkel und Durchführen des Verfahrensschrittes a) für den jeweiligen Schwenkwinkel; und

c) Vergleichen der unter verschiedenen Schwenkwinkeln aufgenommenen Energien in dem ersten Energiebereich.

Vorzugsweise wird eine in dem ersten aktiven Detektormaterial deponierte Energie in mindestens einem zweiten Energiebereich bei verschiedenen Schwenkwinkeln aufgenommen, und die in dem jeweiligen Energiebereich aufgenommene Energie wird für verschiedene Schwenkwinkel miteinander verglichen.

Unter einem Energiebereich wird dabei beispielsweise auch ein vollständiges Spektrum mit bis zur Detektionsgrenze des jeweiligen Detektors reichenden niedrigen und hohen Energien verstanden.

Bei einem Schwenken des Detektorelementes um einen Schwenkwinkel ändern sich die Zählrate und die deponierte Energie in den verschiedenen Energiebereichen. Dieses Detektionsverhalten hängt davon ab, ob die Vorzugsrichtung des Detektorelementes auf die Strahlungsquelle hin oder von ihr weg geschwenkt wird. Für einen höherenergetischen Teil des Spektrums nimmt die jeweilige Zählrate oder Intensität im Spektrum ab, wenn der Detektor bzw. dessen Vorzugsrichtung von der Strahlungsquelle weg bewegt wird. Gleichzeitig nimmt die in dem niederenergetischen Teil des Spektrums registrierte Anzahl von Ereignissen zu.

Bevorzugt wird ein Vorzugs-Schwenkwinkel bestimmt, für den die in dem ersten und/oder zweiten Energiebereich deponierte Energie ein Maximum oder ein Minimum aufweist. Dann kann eine Richtung der Strahlungsquelle bezüglich des Detektorelementes in Abhängigkeit von dem Vorzugs-Schwenkwinkel bestimmt werden.

Ferner kann mit der vorgeschlagenen Detektoranordnung ein alternatives Verfahren zum winkelauflösenden Detektieren von Strahlung mit den folgenden Verfahrensschritten durchgeführt werden:

a) Aufnehmen eines Spektrums der in dem ersten aktiven Detektormaterial deponierten gesamten Energie;

b) Bestimmen einer in einem ersten Energiebereich deponierten ersten Energie;

c) Bestimmen einer in einem zweiten Energiebereich deponierten zweiten Energie; und

d) Vergleichen der ersten deponierten Energie mit der zweiten deponierten Energie.

Mit einem steigenden Winkel gegenüber der Vorzugsrichtung erfolgt in einem entsprechenden Spektrum für die in dem aktiven Detektormaterial deponierten Energien zunächst eine Modulation der Höhe der Compton-Kante und eine Verschiebung der Kante in Richtung kleinerer deponierter Energien. Diese Verschiebung lässt sich erfindungsgemäß durch den Vergleich der deponierten Energien in verschiedenen Energiebereichen erkennen.

Vorzugsweise ist der erste Energiebereich derart vorgesehen, dass eine Compton-Kante in dem aufgenommenen Spektrum in den ersten Energiebereich fällt. Dadurch lässt sich eine Verschiebung der Compton-Kante durch eine Veränderung des Einfallswinkels der Strahlung in das Detektorelement einfach detektieren.

Bevorzugt wird ein Abstand zwischen den beiden Energiebereichen in Abhängigkeit von einer Energieauflösung des Detektorelements gewählt.

Vorteilhafterweise wird das Spektrum durch Messen einer Verteilung der Ereignisse, bei denen im ersten aktiven Detektormaterial Energie deponiert wird, in Abhängigkeit von der jeweiligen deponierten Energie aufgenommen.

Weiterhin ist es möglich, dass Neutronen auf eine Materialprobe zu deren Aktivierung eingestrahlt werden.

Ein Richtungsparameter kann aus dem Verhältnis zwischen der ersten und zweiten deponierten Energie bestimmt werden. Der Richtungsparameter wird bevorzugt für verschiedene Detektionsrichtungen bestimmt, wobei die jeweiligen Detektionsrichtungen im Wesentlichen normal zur der Vorderseite des Detektorelements sind. Dann wird aus dem Richtungsparameter eine Richtung der Strahlungsquelle bezüglich des Detektorelements ermittelt.

Weiterhin ist es möglich, dass die in einem dritten Energiebereich deponierte dritte Energie bestimmt wird. Vorzugsweise überschneiden sich die Energiebereiche dabei nicht.

Möglich ist es, dass den drei deponierten Energien ein erster, zweiter und dritter Farbparameter zugeordnet werden. Analog dem menschlichen Farbsehen wird somit die Intensität der deponierten Energie für zumindest drei Energiebereiche, bzw. Wellenlängen- oder Frequenzbereiche verwendet. Die erste deponierte Energie bestimmt den ersten Farbparameter, die zweite deponierte Energie den zweiten Farbparameter, und die dritte deponierte Energie bestimmt den dritten Farbparameter.

Möglich ist es, in Abhängigkeit von den Farbparametern über das Vorliegen eines gesuchten Materials in der Materialprobe zu entscheiden. Dabei ist beispielsweise einem gesuchten Material mindestens eine vorbestimmte Kombination von Farbparametern zugeordnet.

Bei einer Aktivierung mit Neutronen emittiert das aktivierte Material in der Regel charakteristische Spektrallinien, die üblicherweise, um sie zu erkennen eine hohe Energieauflösung des verwendeten Detektors bedingen. Möglich ist es, das Gamma-Emissionsspektrum eines bekannten zu erkennenden Materials in die drei Energiebereiche einzuteilen und entsprechende Referenz-Farbparameter vorzubestimmen. Durch Vergleich der ermittelten Kombination mit diesen vorbestimmten Farbparametern ist es dann möglich, aus den erfindungsgemäß bestimmten Farbparametern des Spektrums der deponierten Energie in dem Detektorelement das gesuchte Material zu identifizieren.

Dabei können beispielsweise in einem dreidimensionalen Farbparameterraum Volumen festgelegt werden. Fällt ein derart bestimmter Vektor aus den drei Farbparametern in ein solches Volumen, gilt das gesuchte Material als erkannt.

Es kann ein Detektorelement verwendet werden, bei dem die ersten und zweiten Bereiche aktive und getrennt auslesbare Detektormaterialien aufweisen. Dabei werden dann die für die ersten, zweiten und dritten Energiebereiche bestimmten und in den ersten und zweiten aktiven Detektormaterialien deponierten Energien summiert. Aus den zunächst getrennt ausgelesenen Signalen für die Farbparameter in den verschiedenen Energiebereichen werden somit Summensignale gebildet. Dadurch lässt sich die Materialanalyse in Analogie zum Farbsehen noch zuverlässiger durchführen, da eine Verbesserung der Statistik um den Faktor 2 erreicht werden kann. Die getrennt ausgelesenen Signale der ersten und zweiten Bereiche werden gleichzeitig getrennt für die Richtungsanalyse verwendet.

Vorgesehen ist ferner eine Verwendung der erfindungsgemäßen Detektoranordnung zum Erkennen von Sprengstoffen in zu untersuchenden Materialproben oder bei der Räumung von Landminen. Insbesondere der Einsatz zum Aufspüren von stickstoffhaltigen Materialien, wie zum Beispiel Sprengstoffen, bei Gepäck- oder Frachtkontrollen ist vorteilhaft.

Weitere vorteilhafte Ausgestaltungen und Weiterbildungen der Erfindung sind Gegenstand der Unteransprüche.

Im Folgenden wird die Erfindung anhand von bevorzugten Ausführungsformen und Ausführungsbeispielen unter Bezugnahme auf die Figuren beispielhaft näher erläutert. Dabei zeigt:

Figur 1:      ein erfindungsgemäßes Detektorelement;

Figur 2:      eine erste Ausführungsform der erfindungsgemäßen Detektoranordnung;

Figur 3A:     ein Klein-Nishina-Plot der Compton-Streuung;

Figur 3B:     ein Gamma-Intensitätsspektrum;

Figur 4:      den Verlauf von Strahlungs-Trajektorien durch ein Detektorelement;

Figur 5:      Weglängen und Energiedepositionen im Detektorelement;

Figur 6:      eine mögliche Aufteilung eines aufgenommenen Intensitätsspektrums;

Figur 7:      verschiedene geometrische Ausführungsformen des Detektorelementes;

Figur 8, 9:   Simulationen von aufgenommenen Spektren mittels einer erfindungsgemäßen Detektoranordnung;

Figur 10:     eine zweite Ausführungsform der erfindungsgemäßen Detektoranordnung;

Figur 11:     durch Neutronenaktivierung erzeugte Gammalinien;

Figur 12:     eine erfindungsgemäße Aufteilung eines Intensitätsspektrums zur Materialanalyse;

Figur 13:     eine erfindungsgemäße Verfahrensschrittabfolge; und

Figur 14:     eine dritte Ausführungsform der erfindungsgemäßen Detektoranordnung; und

Figur 15:     eine vierte Ausführungsform der erfindungsgemäßen Detektoranordnung.

In den Figuren sind gleiche oder funktionsgleiche Elemente mit, sofern nichts anderes angegeben ist, mit denselben Bezugzeichen versehen worden.

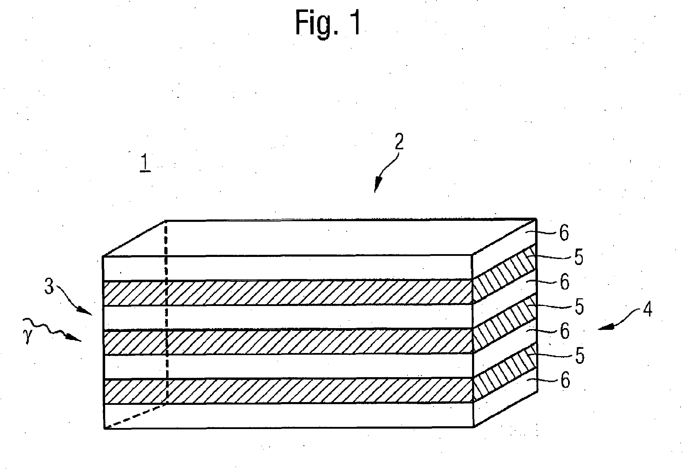

Die Figur 1 zeigt eine Detektoranordnung 1 mit einem erfindungsgemäßen Detektorelement 2. In der Ausführungsform nach Figur 1 hat das quaderförmige Detektorelement 2 eine Vorderseite 3 und eine Rückseite 4. Dabei fallen im Wesentlichen durch die Vorderseite 3 Gammastrahlen $\gamma$ in das Detektorelement 2 ein.

Es sind jeweils abwechselnd Schichten 5, 6 aus einem ersten Detektormaterial und einem zweiten Detektormaterial vorgesehen. Die Schichten 5, 6 verbinden dabei die Vorderseite 3 mit der Rückseite 4. Beispielsweise sind die Schichten 5 aus einem Absorbermaterial für Compton-gestreute Elektronen und die Schichten 6 aus einem Szintillatormaterial gefertigt.

Vorzugsweise wird an der Rückseite 4 des Detektorelementes die von dem Szintillatormaterial erzeugte Lichtemission gemessen. Aus der gemessenen Lichtmenge bzw. der in den Schichten 6, welche Szintillatormaterial aufweisen, deponierten Energie lässt sich auf die Einfallsrichtung der Strahlung $\gamma$ bezüglich einer Vorzugsrichtung oder Ebene des Detektorelementes 2 schließen. In dem hier beispielhaft aus Schichten 5, 6 aufgebauten Detektorelement 2 ist eine Vorzugsebene durch die Schichtebenen vorgegeben.

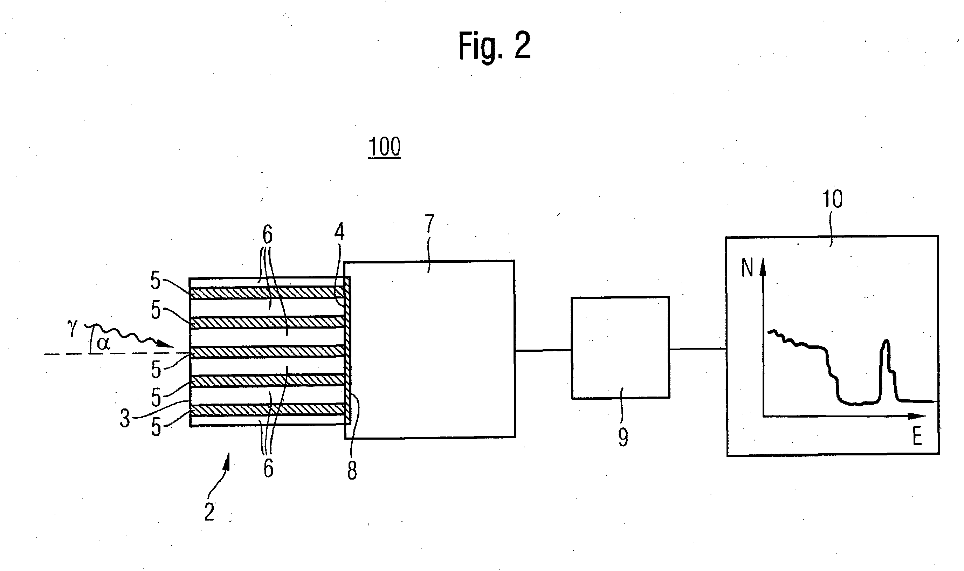

In der Figur 2 ist eine erweiterte Detektoranordnung 100 dargestellt. Das aus schichtartigen Bereichen aufgebaute Detektorelement 2 weist abwechselnd Schichten 5, 6 aus Absorber- und szintillierendem Detektormaterial auf, wobei eine Vorderseite 3 im Wesentlichen in Richtung einer Strahlungsquelle für Gammastrahlung $\gamma$ gerichtet ist. An die Rückseite 4 ist ein Photomultiplier 7 gekoppelt, der integral Szintillationslicht aus den Schichten bzw. Bereichen 6 erfasst. Dabei liegt eine Photokatode 8 auf der Rückseite des Detektorelementes 2 an.

Eine Auswerteeinrichtung 9 liest die entsprechenden Signale aus dem Photomultiplier 7 aus und erstellt insbesondere ein Spektrum für die deponierte Energie in dem Szintillatormaterial der Detektorbereiche 5. Die Auswerteeinrichtung 9 kann beispielsweise durch einen Computer realisiert sein, der über eine geeignete Schnittstelle an den Photomultiplier gekoppelt ist und eine Impulshöhenanalyse der erfassten Ereignisse durchführt. Dabei werden die Ereignisse gezählt, bei denen in dem Szintillatormaterial Energie deponiert wird und in Abhängigkeit von der deponierten Energie aufgetragen. Erfindungsgemäß wird aus der Form des aufgenommenen Spektrums sowohl die Richtung bzw. der Winkel der Vorzugsrichtung des Detektorelementes mit der jeweiligen Gammastrahlungsquelle bestimmt sowie auch auf die Elementezusammensetzung der jeweiligen Gammastrahlungsquelle geschlossen oder das Detektorelement derart gedreht und/oder geschwenkt, dass aus der Veränderung der auslesbaren Signale in Abhängigkeit von der jeweiligen Stellung des Detektorelementes die Richtung der Strahlungsquelle bezüglich der Vorderseite bestimmt werden kann.

In der Figur 2 ist der Einstrahlungswinkel $\alpha$ zwischen der Vorzugsrichtung bzw. -ebene des Detektorelementes und der Vorwärtsbewegung der Gamma-Quanten angegeben. Dieser Winkel ist bei einem Einfall von hochenergetischen Gamma-Quanten auch der Vorzugswinkel der Elektronen-Flugrichtung. Erfindungsgemäß erfolgt eine Kollimation der zu detektierenden Strahlung in dem Detektormaterial selbst. Ein aufwändiger Kollimator vor dem Detektorelement 2 ist nicht notwendig.

Bei der Detektion von Gammastrahlung, welche von durch Neutronen aktivierten Materialien erzeugt wird, sind typischerweise Energien von Gamma-Quanten von über 500 keV involviert. Bei der Detektion von solchen Photonen in Detektormaterialien wird die Energie des Photons meist nicht vollständig an Elektronen und bei Überschreiten einer Schwellenenergie von $E_\gamma$ = 1.022 keV auch an Elektronen-Positronen-Paare übertragen.

Im Folgenden wird die Funktionsweise des erfindungsgemäßen Detektorelementes bzw. der Detektoranordnung anhand von Compton-Streuung bei mittleren Energien zwischen 100 keV und 10 MeV erläutert, wobei ein teilweiser Übertrag der Gamma-Energie erfolgt. Ein vollständiger Energieübertrag dominiert bei kleineren Energien $E_\gamma$ < 100 KeV durch den Photoeffekt und bei großen Energien $E_\gamma$ » 1 MeV durch die Paarbildung. Bei kleinen Gamma-Energien, werden die erzeugten Elektronen unter größeren seitlichen Winkeln bezüglich der Photonenrichtung emittiert. Je höher die Photonenenergie höher der jeweiligen Reaktionsschwelle liegt, desto stärker werden die Elektronen oder auch Positronen unter Vorwärtswinkeln, also in Richtung der Gamma-Photonen, gestreut und gebündelt. Mit steigender Energie der zu detektierenden Strahlung werden ferner die sekundär erzeugten Elektronen oder Positronen zunehmend nach vorne gestreut, was für alle Absorptionsprozesse, wie Photo-Effekt, Compton-Effekt und Paarbildung der Fall ist. Die von den Gamma-Photonen produzierten Elektronen können in einem Festkörper leicht, d. h. über einen kurzen Weg, abgebremst werden. Deshalb ist auch eine Kollimation bzw. eine richtungssensitive Auslesung der entsprechenden Signale leichter zu erreichen.

Erfindungsgemäß erfolgt die Richtungsselektion durch die Geometrie der verschiedenen Detektorbereiche, die zum Beispiel, wie es in den Fig. 1 und 2 dargestellt ist, als Schichten oder Platten laminiert ausgebildet sind, wobei die Schichtdicke kleiner als die mittlere Elektronenreichweite gewählt ist. Da über den dominierenden Compton-Streuprozess nur ein Teil der Energie an den Detektor übertragen wird, ergeben sich Plattenstärken von typischerweise 1 - 2 cm. Die Detektorplatten sollten so voneinander getrennt sein, dass ein Elektron nicht in zwei verschiedenen Platten ein Signal verursacht. Dies kann zum Beispiel dadurch erreicht werden, dass die einzelnen Platten aus einem aktiven Detektormaterial durch passive Absorberschichten getrennt sind. Bei schweren Absorbern, wie Blei oder Eisen genügen in der Regel Schichtdicken von einigen Millimetern.

Die erfindungsgemäße Detektoranordnung eignet sich insbesondere für den Energiebereich zwischen 500 keV und 10 MeV, in dem der Compton-Effekt dominiert. Sie kann jedoch auch darüber hinaus angewendet werden, obwohl nur wenige Gamma-Linien oberhalb des Compton-Energiebereiches liegen. Zum Beispiel kann insbesondere die Stickstoff-Linie bei 10,8 MeV detektiert werden. Die im Weiteren beschriebenen physikalischen Vorgänge und Detektionsverfahren werden anhand des Compton-Effektes näher erläutern, eignen sich jedoch auch zur Anwendung in anderen Energiebereichen. Beim Compton-Effekt ergibt sich eine feste Beziehung zwischen der Einfallsrichtung des Photons und der Flugrichtung des erzeugten Compton-gestreuten Elektrons. Dabei ist der Energieübertrag $\Delta E$ des Photons auf das Compton-Elektron abhängig von dem Streuwinkel. Der maximale Energieübertrag $\Delta E_{max}$ ergibt sich für eine 180°- bzw. n-Streuung. Dann bewegt sich das Compton-Elektron mit der Energie $E_{max}$ in derselben Richtung wie das eingefallene Photon weiter. Der maximale Energieübertrag ergibt sich zu

$$(\text{Gl. 1}) \qquad \Delta E_{max} = E_{max} = E_\gamma \frac{2\varepsilon}{1+2\varepsilon} \ .$$

Wobei $\varepsilon = \frac{E_\gamma}{m_e c^2}$ , und $m_e c^2 = 511$ keV entspricht der Elektronen-ruhemasse.

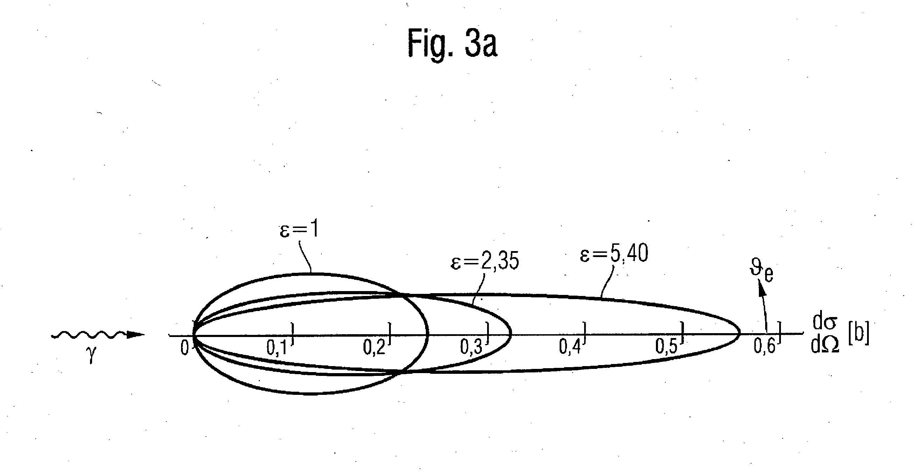

Die Figur 3A zeigt die Winkelabhängigkeit der Streuung als Auszug eines Klein-Nishina-Plots. Dabei ist der Wirkungsquerschnitt $d\sigma/d\Omega$ in barn gegen den Streuwinkel $\vartheta$ des Elektrons aufgetragen. Mit wachsender Gamma-Energie werden die Compton-Elektronen immer mehr nach vorne gestreut. Dies ist auch bei der Paarbildung und beim Photoeffekt der Fall. In der Figur 3A entsprechen $\varepsilon$ = 1 $E_\gamma$ = 0,5 MeV und $\varepsilon$ = 5 $E_\gamma$ = 2,5 MeV. Bereits bei $\varepsilon$ = 1 werden die Elektronen besonders stark in Vorwärtsrichtung gestreut.

Das Compton-Elektron verliert seine kinetische Energie durch Stöße mit weiteren Hüllenelektronen in dem Detektormaterial, was zu Ionisationen führt. Auch bei weiteren Stößen der sekundären Elektronen ergibt sich bei höheren Energien wegen der Impulserhaltung eine hauptsächlich vorwärts gerichtete Streurichtung. Somit fliegen die erzeugten Elektronen mit hoher Wahrscheinlichkeit in der Vorwärtsrichtung der ursprünglichen Gamma-Quanten. Es ergibt sich eine "Vorwärtskaskade" der emittierten Elektronen. Die entstehenden Sekundärelektronen deponieren weiter ihre Energie in dem Material und regen Lichtemission in dem szintillierenden Detektormaterial an. Dies wird beispielsweise durch den Photomultiplier 7 registriert. Die entsprechen erzeugten elektrischen Signale, welche der Auswerteeinrichtung 9 zugeführt sind, sind proportional zu der in dem Szintillatormaterial des Detektors deponierten Energie. Das entsprechende Impulshöhenspektrum weist dann eine Compton-Kante und den Photo-Peak auf.

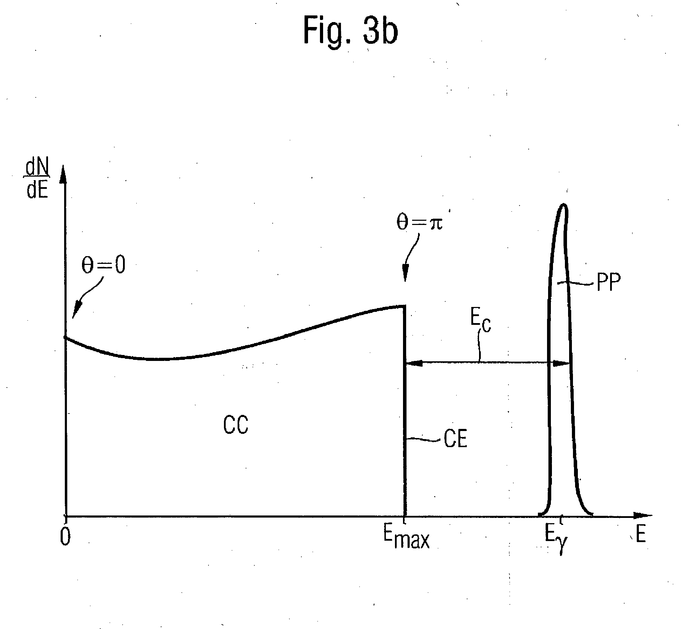

Die Figur 3 zeigt beispielhaft ein Spektrum der Elektronen für eine Streuung mit Gamma-Quanten der Energie $E_\gamma$. Dabei ergibt sich bis zu der maximalen Übertragsenergie $E_{max}$ das Compton-Kontinuum CC, wobei bei einem Streuwinkel von $\theta$ = 0° die niedrigste Energie erreicht wird, und bei der Vorwärtsstreuung mit $\theta$ = n die maximale Energie $E_{max}$, die die Compton-Kante CE bildet. Ferner ist ein Photo-Peak PP dargestellt, der in einem Abstand von $E_c = E_\gamma - E_{max}$ von der Compton-Kante CE auftritt.

Erfindungsgemäß wird die Energiedeposition nicht in dem vollständigen Detektorvolumen zwischen der Vorder- und Rückseite erfasst, sondern nur in den ausgezeichneten Bereichen bzw. Segmenten, die Szintillatormaterial aufweisen. Dadurch lässt sich eine richtungsabhängige Modulation der Energiedeposition durch Compton-Elektronen feststellen. Erfindungsgemäß wird eine proportionale Lichtmenge zu der in dem jeweiligen szintillierenden Detektormaterial deponierten Energie durch den Photodetektor erfasst. Dabei spielt es keine Rolle, an welcher Seite des Detektorelements der Photomultiplier 7 angeordnet ist.

Zur einfacheren Erläuterung werden nur Compton-Elektronen betrachtet, die einen maximalen Streuwinkel, also 180°, aufweisen. Im Rahmen eines CSDA-Modells geben diese Compton-Elektronen ihre Energie entlang einer Strecke ab, die in der Richtung des jeweiligen einfallenden Gamma-Quants ist. Dabei steht CSDA für Continuous Slowing Down Approximation. Je nach Eintrittswinkel und -ort des Gamma-Quants in das Detektorelement ergeben sich unterschiedliche Energiedepositionen in dem Szintillatormaterial.

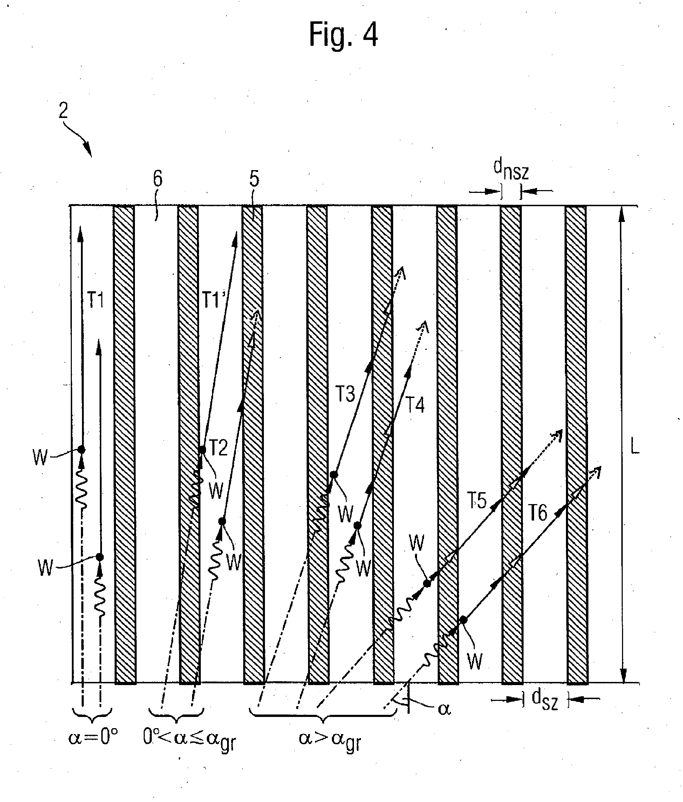

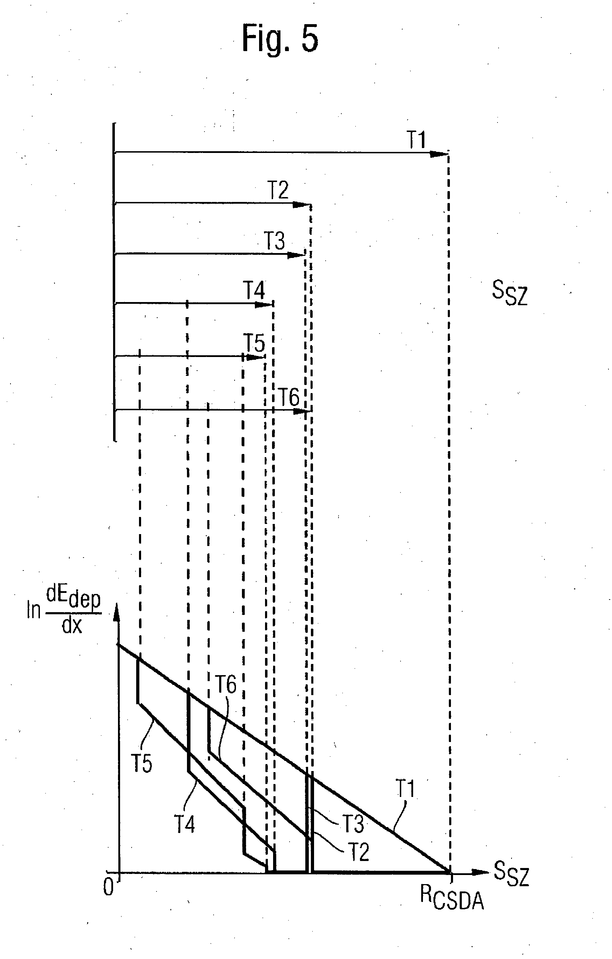

In der Figur 4 sind mögliche Trajektorien durch ein erfindungsgemäßes Detektorelement 2 dargestellt und in der Figur 5 die einer jeweiligen Trajektorie zugeordnete verbleibende Weglänge $S_{SZ}$ im Szintillatormaterial sowie die Energiedeposition eines jeweiligen Gamma-Quants.

In der Figur 4 sind die jeweiligen Wechselwirkungspunkte W, d. h. der Ort einer jeweiligen 180°-Compton-Streuung durch geschlossene Kreise dargestellt. Die Strichpunktlinien und Schlangenlinien deuten das einlaufende Photon an. Die Pfeile mit geschlossener Pfeilspitze bezeichnen eine Energiedeposition der Compton-Elektronen in Szintillatormaterial und die Pfeile mit einer offenen Pfeilspitze Energiedeposition in Absorber bzw. nicht-szintillierendem Material der Detektorbereiche 5.

Bei einem frontalen Einfall, also parallel zu den Ebenen der Detektormaterialschichten 5, 6 und bei einem Eintritt des Gamma-Quants in einen Bereich 6 aus szintillierendem Detektormaterial wie es die Trajektorien T1 darstellen, wird die gesamte Energie in einem Segment bzw. einer Schicht des Detektorelementes deponiert. Die jeweilige Energiedeposition $E_{dep}$ in Bereichen mit szintillierendem Material ist in der Figur 5 genauer dargestellt.

In der Figur 5 sind zunächst die verbleibenden Weglängen $S_{SZ}$ im Szintillatormaterial für die in der Figur 4 dargestellten Trajektorien T1-T6 dargestellt. Ferner zeigt die Figur 5 in logarithmischer Darstellung die Energiedeposition $E_{dep}$ in dem Szintillatormaterial in Abhängigkeit von der Weglänge $S_{SZ}$.

Sofern die Länge L der Detektorbereiche größer ist als $R_{CSDA}$, also die Reichweite der Strahlung in dem jeweiligen Material, erfolgt die größte Energiedeposition im Szintillatormaterial bei einem frontalen Einfall auf das Detektorelement gemäß der Trajektorie T1. Dann wird die gesamte Elektronen-Energie in einem der Detektorbereiche mit szintillierendem Detektormaterial deponiert. Dies gilt für alle Energien der Compton-Elektronen.

Gemäß der Figur 5 wird über die gesamte Reichweite der Trajektorie T1 Energie im Szintillatormaterial deponiert, welche beispielsweise mittels eines angekoppelten Photomultipliers 7 gemessen wird.

Bei steigendem Einfallswinkel $\alpha$ steigt die Wahrscheinlichkeit, dass Compton-Elektronen aller Energien teilweise Energie nicht im szintillierenden Material deponieren, sondern in einer der Absorberschichten 5. Dadurch reduziert sich für jede Elektronen-Energie des Spektrums die Wahrscheinlichkeit einer kompletten Energiedeposition in der jeweiligen aktiven Detektorschicht.

Bei der Trajektorie T4 erfolgt beispielsweise zunächst eine Energiedeposition im Szintillatormaterial, dann im Absorbermaterial bzw. nicht-szintillierendem Material und erneut im Szintillatormaterial. Die verbleibende Weglänge im Szintillator ist daher erheblich geringer gegenüber der Trajektorie T1.

Auch die Kurve für die Energiedeposition im Szintillatormaterial zeigt deutlich Stufen, welche durch die Energiedeposition im Absorbermaterial hervorgerufen sind. Je kleiner die Dicke $d_{SZ}$ und $d_{nsz}$ der Bereiche mit Szintillatormaterial bzw. Absorbermaterial ist, desto größer wird die Wahrscheinlichkeit einer unvollständigen Energiedeposition in einem entsprechenden Szintillatormaterialsegment.

Sofern die Reichweite $R_{CSDA}$ der Compton-Elektronen im szintillierenden Material größer als die Breite $d_{SZ}$ des Bereichs ist, ergibt sich ein Grenzwinkel $\alpha_{gr}$, ab dem die maximale Energie $E_{max}$ nicht mehr in einem einzigen Szintillatorsegment zu deponieren ist:

$$(Gl.\ 2) \qquad E_{dep}\,(\alpha \geq \alpha_{gr}) < E_{dep,max}\,.$$

Sind die Breiten $d_{SZ}$, $d_{nsz}$ der szintillierenden und nichtszintillierenden Bereiche kleiner als die jeweilige Reichweite, steigt mit ansteigendem Einfallswinkel $\alpha$ die Wahrscheinlichkeit, dass die Energie in mehreren Szintillatorsegmenten deponiert wird. Eine Energiedeposition in k = 2, 3, 4 ... Szintillatorbereichen setzt voraus, dass zuvor in nichtszintillierendem Material mindestens eine Strecke $S_{NSZ} \geq k \cdot d_{NSZ}/\sin\alpha$ zurückgelegt worden ist. Die jeweilige deponierte Energie eines Elektrons sinkt somit mit der Anzahl der von den Sekundärelektronen durchlaufenden Szintillatorsegmente bzw. Bereiche. Es sind daher weitere Grenzwinkel bestimmbar, ab denen eine Energiedeposition in k = 2, 3, 4 usw. Szintillatorsegmenten erfolgt.

Betrachtet man nicht nur die Gamma-Quanten der Compton-Kante, sondern die Richtungsemissionen des gesamten Spektrums der Compton-Elektronen, so findet man bereits bei moderaten Gamma-Energien aufgrund des Impulserhaltungssatzes eine starke Vorwärtsstreuung aller erzeugten Compton-Elektronen, wie es in der Figur 3A auch dargestellt ist. Das bedeutet, dass auch die niederenergetischen Elektronen bei voller oder akkurater Ausrichtung des Detektorelementes auf die Strahlungsquelle ihre Energie komplett im Targetmaterial bzw. Szintillatormaterial deponieren können. Wird das Detektorelement nun um einen Winkel zur Strahlungsquelle geschwenkt, dann werden auch viele niederenergetische Elektronen in das Absorbermaterial laufen und dort Energie verlieren ohne zum Detektorsignal beizutragen. Insgesamt bedeutet dies für das Detektorspektrum, dass hochenergetische Signale verloren gehen und das ganze Spektrum zu niederen Energien verschoben wird.

Da also die sekundären Elektronen schräg durch die Schichten oder Platten der ersten und zweiten Bereiche laufen, ergibt sich eine maximale Weglänge pro Schicht von zum Beispiel $S_{SZ} = d_{SZ}/\sin\alpha$. Da die Elektronen in jedem Punkt der Platten erzeugt werden können, bedeutet dies, dass der Weg für die Energieabgabe der Elektronen beschränkt ist, und die Elektronen können nur einen Teil ihrer Energie im jeweiligen Detektormaterial abgeben. Die restliche Energie wird in dem benachbarten Absorbermaterial abgegeben. Somit wird das gesamte Spektrum der deponierten Energie zu niedrigeren Energien verschoben.

Eine Aufnahme derartiger Energiespektren unter unterschiedlichen Einstrahlungswinkeln mit einem beweglichen Detektor oder mit mehreren Detektoren, die unter verschiedenen Winkeln zueinander angeordnet sind, ergibt Spektren mit den größten Hochenergieanteilen, wenn die Vorzugsrichtung bzw. die Vorderseite des Detektorelementes frontal auf die Gamma-Quelle gerichtet ist.

Die Richtung der einfallenden Strahlung bezüglich der Vorzugsrichtung des verwendeten Detektorelementes kann durch Aufnahme von Spektren der in dem Detektor durch die sekundären Elektronen deponierten Energie erfolgen. Dazu werden für verschiedene Schwenkwinkel β des Detektorelementes Spektren aufgenommen und analysiert. Dabei wird das unter einem jeweiligen Schwenkwinkel aufgenommene Spektrum in mehrere Energiebereiche eingeteilt und die jeweilige darin deponierte Energie gemessen. Diese Energien können, wie es weiter unten erläutert ist, als Integrale über die Intensität betrachtet werden, oder es können auch einzelne Kanalnummern des entsprechenden Intensitätshistogramms verwendet werden. Da bei einem frontalen Auftreffen der Gamma-Quanten auf das Detektorelement auch die gestreuten, sekundären Elektronen in die Gamma-Richtung laufen und Energie in nur einer der Detektorschichten deponieren, ist der Hochenergieanteil im Spektrum dann am größten. Im einfachsten Fall genügen daher zwei Energiebereiche, ein niedriger und ein höherer, beispielsweise in der Nähe der Compton-Kante, um den Hochenergieanteil abzuschätzen.

Das Detektorelement wird also derart auf einen Schwenkwinkel geschwenkt, dass der Hochenergieanteil maximal wird und der Niedrigenergieanteil in dem zugehörigen Spektrum im Vergleich zu den übrigen Schwenkwinkel minimal wird. Dann deutet die Vorzugsrichtung oder, im Falle eines schichtartig aufgebauten Detektors wie es in Figur 1, 2 oder 4 dargestellt ist, die Vorderseite in Richtung auf die Strahlungsquelle.

Um die Richtung der in ein erfindungsgemäßes Detektorelement einfallenden Strahlung zu bestimmen, ist es möglich, dass ein geeigneter Richtungsparameter r bestimmt wird, welcher aus dem Verhältnis zweier Integrale in dem aufgenommenen Spektrum abhängt:

$$(\text{Gl. 3}) \qquad r = I_1 / I_2$$

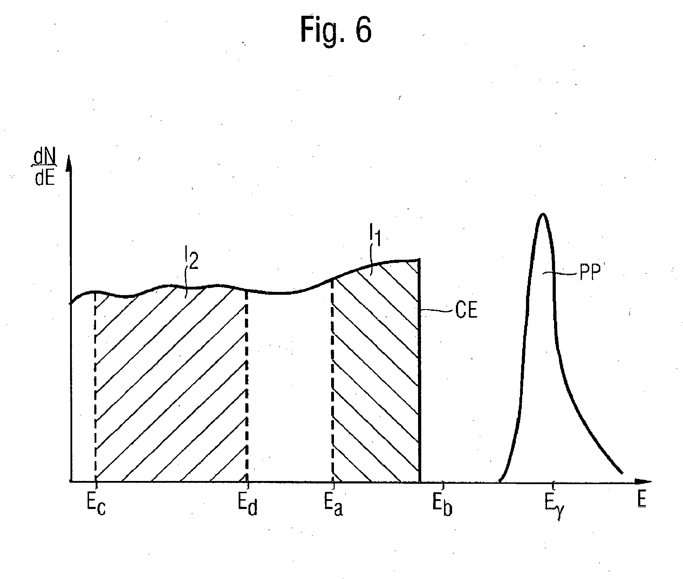

Dabei bezeichnet $I_1$ ein Integral zum Beispiel in der Nähe der Compton-Kante und $I_2$ ein Integral über einen niederenergetischen Bereich im Compton-Kontinuum in ausreichendem Abstand von der Compton-Kante CC. Das Integral $I_1$ deckt dabei also einen niederenergetischen Bereich ab und das Integral $I_2$ einen höherenergetischen Bereich. Figur 6 illustriert mögliche Integrationsgrenzen, für die Integrale

$$(\text{Gl. 4}) \qquad I_1 = \int_{E_a}^{E_b} \frac{dN(E)}{dE} dE \qquad \text{und} \qquad I_2 = \int_{E_c}^{E_d} \frac{dN(E)}{dE} dE \; .$$

wobei die Integrationsgrenzen $E_a$ und $E_b$ einen erwarteten Energiebereich überdecken, in dem die Compton-Kante liegt und $E_c$ und $E_d$, wie eingangs bemerkt, einen Bereich im Compton-Kontinuum begrenzen.

Die Wahl der Integrationsgrenzen $E_a$, $E_b$, $E_c$, $E_d$ hängt dabei vorzugsweise von der Energieauflösung $R(E) = \Delta E/E$ des Detektors ab. $\Delta E$ entspricht dabei der Halbwertsbreite eines durch monoenergetische Photonen gebildeten Photo-Peaks. Für den Abstand der Intervalle, also den Abstand zwischen $E_a$ und $E_d$ ergibt sich mit einer energieabhän-gigen Auflösung $R(E) = \Delta E/E$:

$$(\text{Gl. 5}) \qquad E_a - E_d > R(E_a) \cdot E_a \qquad \text{und} \qquad E_a - E_d > R(E_d) \cdot E_d \; .$$

Aus dem Richtungsparameter r lässt sich dann auf den jeweiligen Einfallswinkel schließen. Bei einem Frontaleinfall bzw. bei niedrigem Einfallswinkel α der zu detektierenden Strahlung dominiert das Integral $I_1$, während bei steigendem Einfallswinkel α der Richtungsparameter r abnimmt. Durch Drehen oder Schwenken des Detektorelementes kann daher ein Maximalwert für den Richtungsparameter r erreicht werden, und so auf die Richtung der entsprechenden Strahlungsquelle in Bezug auf die Vorzugsebene des Detektorelementes geschlossen werden. Bei einer schichtweisen Anordnung von szintilierendem und nicht-szintillierendem Material wie es in den Figuren 1, 2 und 4 beispielhaft dargestellt ist, ergibt sich eine Vorzugsebene parallel zu den Schichten.

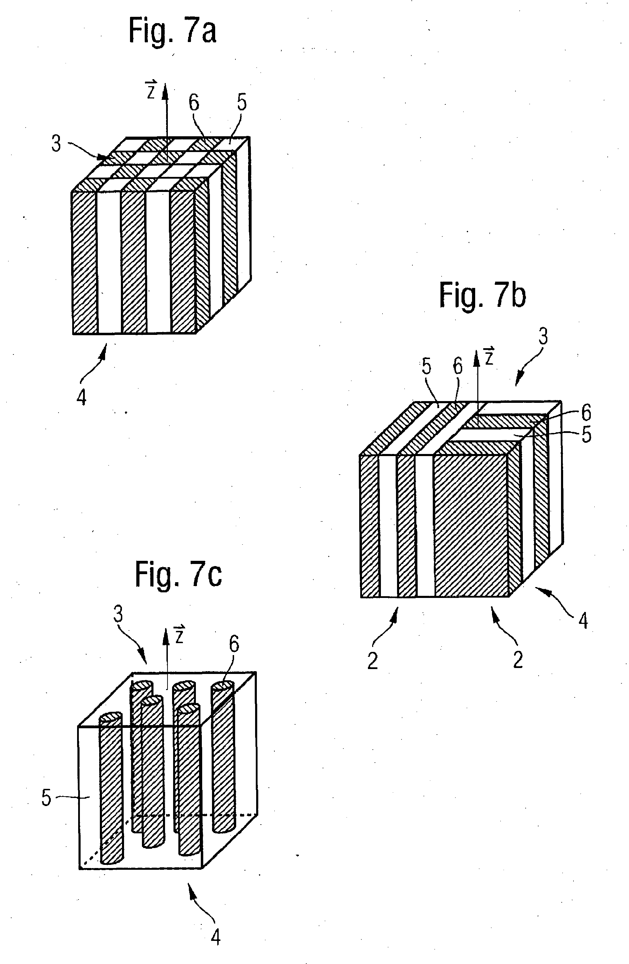

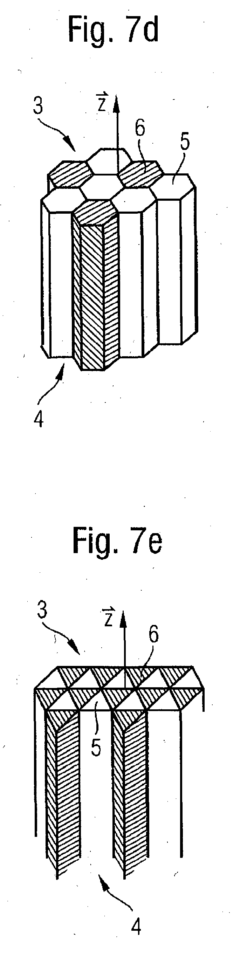

Durch Kombination zweier erfindungsgemäßer Detektorelemente aus Schichten, wobei die Vorzugsebenen der Detektorelemente senkrecht aufeinander montiert werden, kann durch die sich schneidenden Vorzugsebenen der beiden Detektorelemente eine Richtungsauflösung erzielt werden. In der Figur 7 sind Beispiele für mögliche alternative Anordnungen von Bereichen mit szintillierendem Detektormaterial und nicht-szintillierendem Detektormaterial dargestellt. Die schattierten Bereiche zeigen in dieser Figur Bereiche mit Szintillatormaterial oder aktivem Detektormaterial an.

Die Figur 7b zeigt beispielsweise zwei Detektorelemente 2, die senkrecht zueinander orientiert sind. Selbstverständlich ist es auch möglich, die Bereiche aus szintillierendem und nicht-szintillierendem Detektormaterial aus Polyedern aufzubauen. Beispielsweise zeigt die Figur 7a einen Block aus Quadern mit im Wesentlichen quadratischer Grundfläche, wobei Segmente aus Absorbermaterial oder nicht-szintillierendem Material 5 und szintillierendem Material 6 schachbrettartig angeordnet sind. Die Figuren 7d und 7e zeigen Detektorelemente, die ebenfalls aus Polyedern, in der Figur 7d mit sechseckiger Grundfläche und in der Figur 7e mit dreieckiger Grundfläche, aufgebaut sind. Denkbar ist auch, wie in der Figur 7c dargestellt ist, die Anordnung von zylinderförmigen Bereichen aus szintillierendem Material, deren Symmetrieachse parallel angeordnet sind, und die von einem nicht-szintillierendem Material umschlossen sind. In der Figur 7 ist die Vorzugsrichtung jeweils durch einen Vektor z angegeben.

Alternativ zu Bereichen mit szintillierendem Material und Absorber oder nicht-szintillierendem Material können auch für die szintillierenden Materialien Halbleitermaterialien verwendet werden, die als Halbleiterdetektor arbeiten. Dann können aus diesen jeweiligen aktiven Bereichen direkt Signale ausgelesen werden, welche die jeweilige deponierte Energie angeben.

In einer entsprechend abgewandelten Ausführung der erfindungsgemäßen Detektoranordnung weisen die ersten und zweiten Bereiche aktives Detektormaterial auf, wobei die beiden Bereiche jeweils getrennt auslesbar sind. Das Material der ersten Bereiche wirkt dann als Absorber für das Material der zweiten Bereiche und umgekehrt. Man kann in diesem Fall auch von zwei miteinander verzahnten Detektorelementen sprechen, wobei die aktiven Schichten (Bereiche mit aktivem Detektormaterial) der beiden Detektorelemente ineinander geschoben sind und wie Zähne ineinander greifen. Die Schichtdicken können dabei für die beiden Materialien gleich sein oder sich unterscheiden. Es sind auch chemisch gleiche oder unterschiedliche Materialzusammensetzungen möglich.

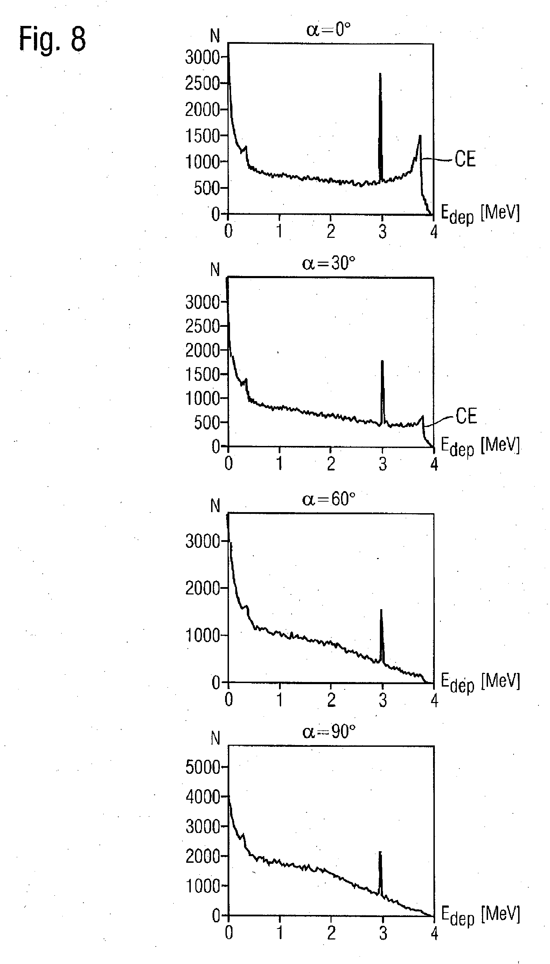

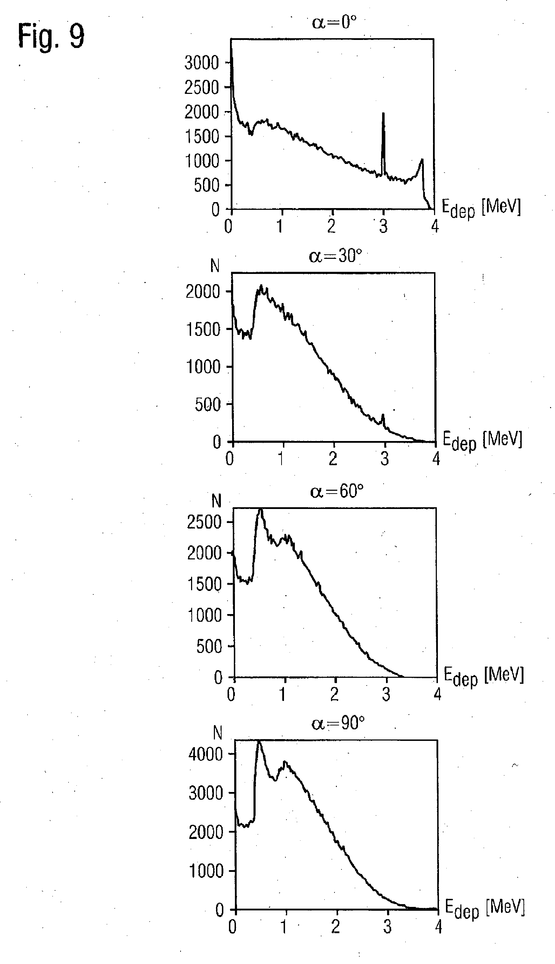

Die Figuren 8 und 9 zeigen Simulationsergebnisse der Anmelderin für ein schichtweise aufgebautes erfindungsgemäßes Detektorelement für verschiedene Schichtdicken $d_{SZ}$, $d_{nsz}$ und Einstrahlungswinkel $\alpha$ der Gammastrah-lung. Es werden dabei monoenergetische Photonenstrahlen mit einer Photonenenergie von 4 MeV angenommen. Das simulierte Detektorelement entspricht im Wesentlichen, der Ausführungsform wie es in der Figur 1 dargestellt ist, wobei jeweils ein Stapel quadratischer Platten der Abmessung 44 x 44 mm$^2$ aus einem organischen Szintillator Polyvinyltoluen für die Bereiche mit Szintilatormaterial und Eisen als Absorbermaterial angenommen wurde.

Die Figur 8 zeigt dabei Spektren von in dem jeweiligen Szintilatormaterial deponierter Energie für sechs Plattenpaare mit einer Dicke $d_{SZ}$ = 9,5 mm für die Segmente aus szintillierendem Material und einer Dicke von $d_{FE}$ = 1,6 mm für die Eisenplatten. Die Figur 9 zeigt Spektren für ein aus 24 Plattenpaaren zusammengestelltes Detektorelement, wobei $d_{SZ}$ = 2,4 und $d_{FE}$ = 0,4 mm betragen. Ein erfindungsgemäßes Detektorelement weist daher ein nur geringes Volumen von etwa 67 x 44 x 44 mm$^3$ auf und ist damit einfach handhabbar und vielseitig einsetzbar.

Für das Szintilatormaterial Polyvinyltoluen wurde eine Dichte von $\rho_{SZ}$ = 1,032 g/cm$^3$ und eine stöchometrische Zusammensetzung von $C_{10}H_{11}$ angenommen. Für Eisen ist eine Dichte von $\rho_{FE}$ = 7,874 g/cm$^3$, angenommen. Die Energieauflösung des Detektorelementes wurde als R = 0 angenommen. In den Figuren 8 und 9 sind Histogramme bzw. Verteilungen von Ereignissen in dem Detektorelement dargestellt, wobei insgesamt 10$^6$ Photonen nachgewiesen wurden. Der jeweilige Querschnitt des Detektorelementes wurde dabei gleichmäßig bestrahlt.

Bei der Konfiguration gemäß der Figur 8, also mit sechs Plattenpaaren, ist deutlich eine Compton-Kante CE bei Einfallswinkeln $\alpha$ = 0° und $\alpha$ = 30° zu erkennen. Mit zunehmendem Einfallswinkel $\alpha$ nimmt der Anteil von hochenergetischen Ereignissen im Spektrum ab. Eine stärkere Richtungsabhängigkeit in der Form des aufgenommenen Spektrums ist in der Figur 9 in der Konfiguration mit 24 Plattenpaaren erkennbar. Bei 24 Plattenpaaren und daher auch niedrigerer Plattendicke ist der Grenzwinkel $\alpha_{gr}$, bei dem sich die Spektralform deutlich ändert, kleiner als in der Konfiguration gemäß der Figur 8. Die bei etwa 3 MeV auftretenden Peaks entsprechen Double-Escape-Peaks der Paarerzeugung und treten 1,022 MeV unterhalb der Gamma-Energie auf.

Neben der richtungsauflösenden Detektion von Gammastrahlung ermöglicht die Erfindung ferner die Erkennung bestimmter Elemente in einer zu untersuchenden Materialprobe. Als besonderes Anwendungsfeld kommt dabei die Detektion von Sprengstoffen in Frage, beispielsweise zur Minenräumung.

Daher sieht eine weitere Ausführungsform der richtungsaüflösenden Detektoranordnung eine Neutronenquelle vor zum Beschuss einer Materialprobe, wie beispielsweise einen bestimmten Bereich des Erdbodens mit Neutronen. Dadurch wird das beschossene Material aktiviert und sendet charakteristische Gammastrahlung aus.

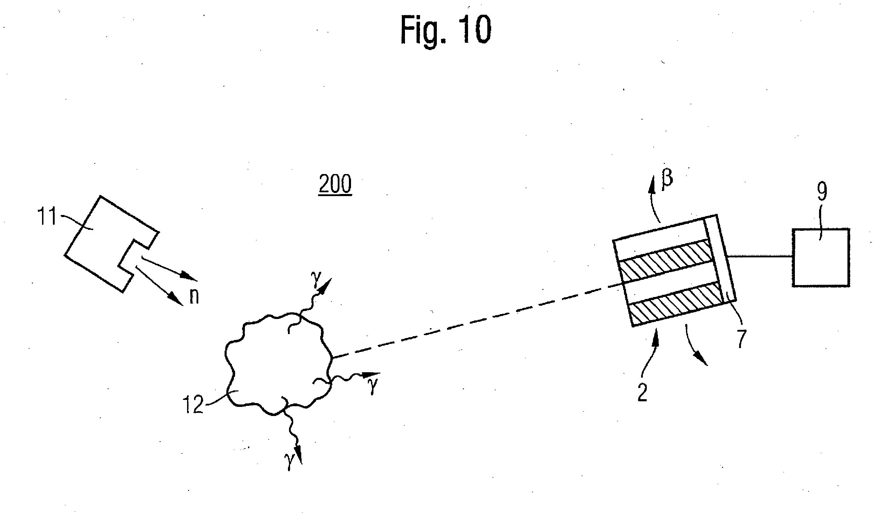

Figur 10 zeigt eine entsprechende erfindungsgemäße Detektoranordnung 200. Es ist eine Neutronenquelle vorgesehen, die vorzugsweise gerichtet Neutronen n aussendet, welche auf eine Materialprobe 12 eingestrahlt werden. Durch Einfang der Neutronen erfolgt eine Kernreaktion der jeweiligen Materialprobe, sodass im Anschluss Gamma-Quanten ausgesendet werden, welche von einem erfindungsgemäßen Detektorelement 2, welches schwenkbar angeordnet ist, detektiert wird. Dazu ist, wie bereits eingangs erläutert, ein Photomultiplier 7 vorgesehen, der integral die in den aktiven Detektorbereichen deponierte Energie misst und einer Auswerteeinrichtung 9 zuführt. Durch Schwenken und Bestimmen des Richtungsparameters r kann winkelauflösend die Position der Gamma-Quelle, also der Materialprobe 12, bestimmt werden.

Das Material der Erdoberfläche weist im Wesentlichen leichte Elemente H, C, N, O, Mg, Si, Al auf. Besonders häufig treten $SiO_2$, Quarzsand und Aluminium-Magnesium-Silikate auf. Mit steigender Neutronenenergie fallen die Neutroneneinfangquerschnitte dieser Elemente ab. Neutronen unterhalb von 4 MeV werden besonders häufig eingefangen. Beispielsweise lauten die Einfangquerschnitte für thermische Neutronen bei Kohlenstoff 3,3 mb, Sauerstoff < 0,2 mb, Stickstoff 80 mb, Magnesium 63 mb, Silizium 130 mb, Aluminium 230 mb. Der Einfang eines Neutrons führt insbesondere bei den Elementen Stickstoff, Magnesium, Silizium, Aluminium zu Energiegewinnen zwischen 4,5 und 10 MeV. Diese angeregten Zustände fallen über eine Kaskade über einen oder mehrere Zwischenzustände unter Aussendung von Gammastrahlung in den Grundzustand zurück. Lediglich Stickstoff hat einen direkten Übergang mit Drehimpuls j = $^3/_2$ zu j = ½ von 10 MeV mit 10 % Wahrscheinlichkeit. Üblicherweise ergeben sich drei bis fünf dominante Linien in dem entsprechenden Gammaspektrum bei Energien zwischen 2,5 und 7,5 MeV.

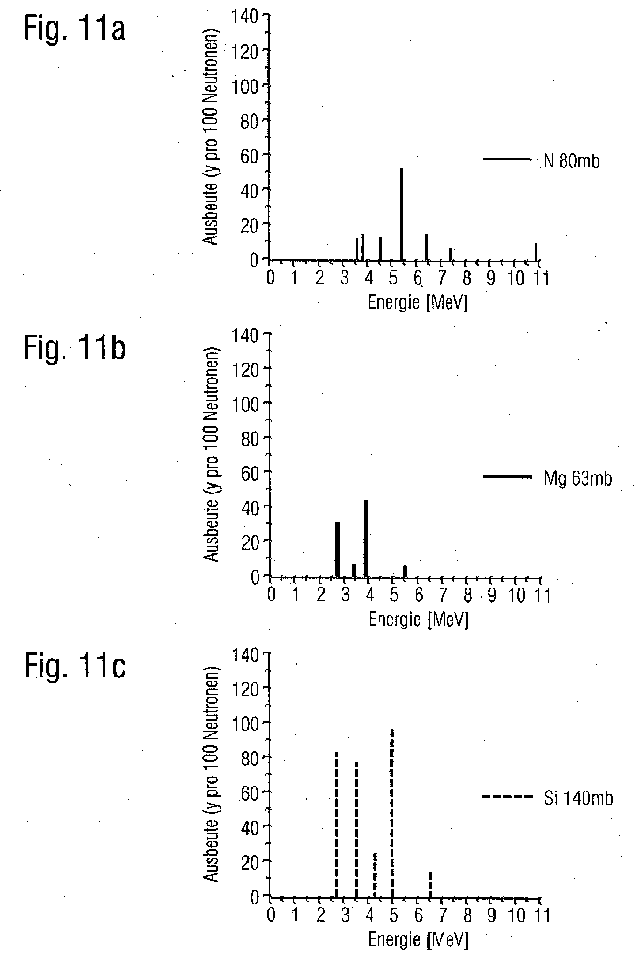

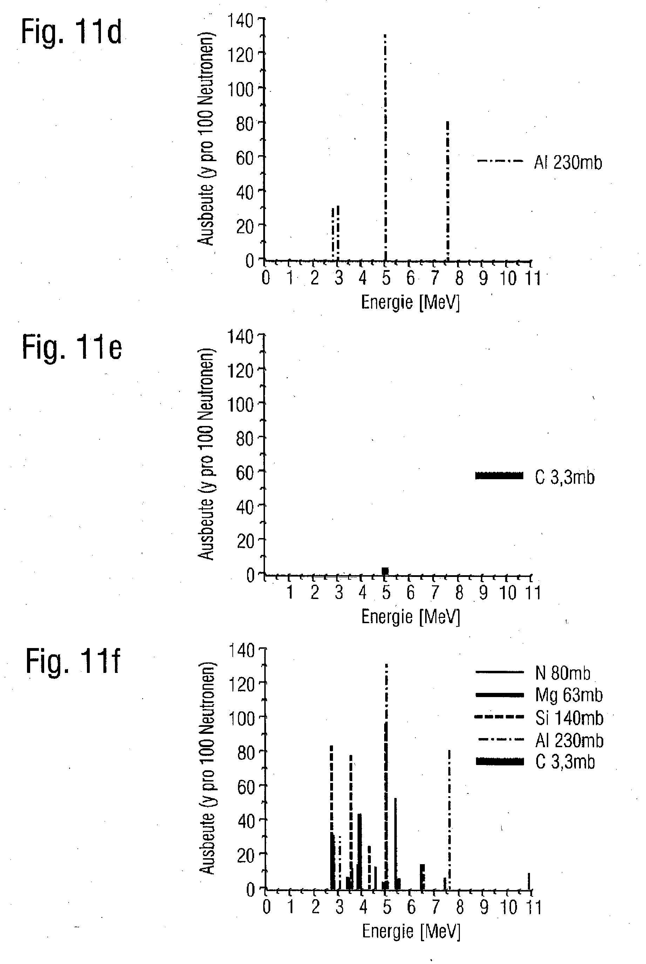

Die Figur 11 zeigt typische Ausbeuten an Gammastrahlung nach Neutronenreaktionen bzw. einer Neutronenaktivierung von Stickstoff, Magnesium, Silizium, Aluminium und Kohlenstoff (Figur 11a-e) sowie Ausbeuten, die sich bei einer entsprechenden Elemente- oder Materialprobenmischung ergeben (Figur 11f). Dabei liefert die Ausbeute die Anzahl der Gamma-Quanten pro 100 eingefangener Neutronen. Insbesondere der für die Sprengstofferkennung wichtige Stickstoff hat zwischen 5 und 6,5 MeV vier signifikante Linien sowie die 10%-ige Abregung bei 10,8 MeV.

Üblicherweise wird versucht eine hochauflösende Spektroskopie, um einzelne Linien in den sich ergebenden Gammaspektren aufzulösen und so Anhäufungen von Stickstoff zu verifizieren. Diese hohe Energieauflösung eines entsprechenden Detektors ist allerdings mit sehr geringer Ansprechwahrscheinlichkeit und extrem hohem apparativen Aufwand verbunden, um zwischen Linien anderer Elemente unterscheiden zu können. Diese liegen, wie in der Figur 11f dargestellt ist, sehr eng nebeneinander.

Gemäß der Erfindung erfolgt keine höchstauflösende Gammaspektroskopie, sondern es werden, wie in der Figur 9 dargestellte Spektren aufgenommen, um zunächst die Richtung der auf das jeweilige Detektorelement einfallenden Strahlung aufzulösen. Die jeweiligen Gammalinien erzeugen in dem erfindungsgemäßen Detektorelement breite Comptonverteilungen, die sich, wie es sich aus den Figuren 8 und 9 ergibt, von der Compton-Kante bis zu kleinen Energien erstreckt. Gemäß der Erfindung ist nun zum Detektieren eines gesuchten Materials, beispielsweise Stickstoff, in der mit Neutronen aktivierten Materialprobe vorgesehen, das aufgenommene Spektrum in mindestens drei Teile zu unterteilen und jeweils die integrale Intensität über diese drei Bereiche zu bestimmen, wobei jeder Intensität ein Farbparameter zugeordnet wird.

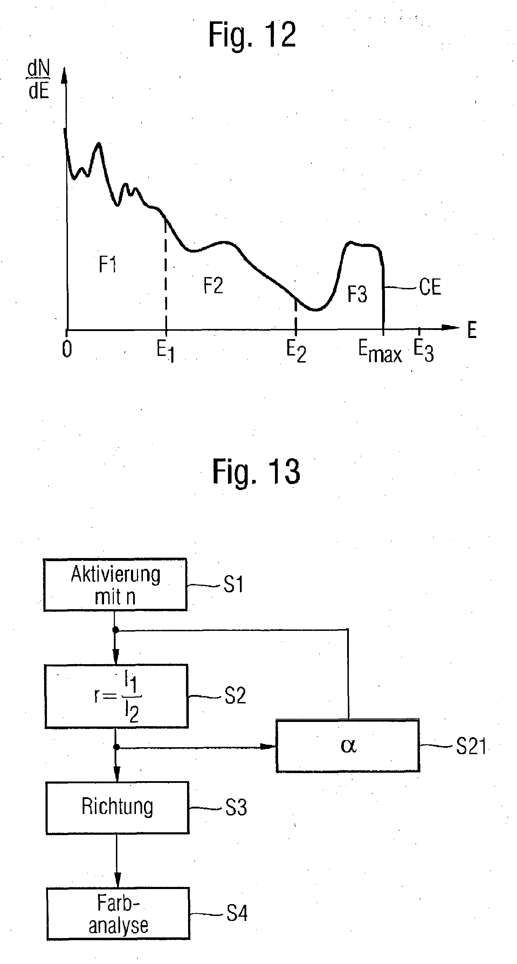

Dabei wird ein dem Farbsehen ähnliches Erkennungsverfahren zum Detektieren bestimmter Elemente in der Materialprobe angewandt. Die Figur 12 zeigt beispielhaft ein aufgenommenes Intensitätsspektrum bzw. eine aufgenommene Verteilung der in dem aktiven Detektormaterial, also in dem Szintillatormaterial deponierten Energien. Dabei bezeichnet CE die Compton-Kante bei einem maximalen Energieübertrag $E_{max}$. Es wird zunächst die deponierte Energie in einem ersten Energiebereich, z. B. zwischen 0 und $E_1$ integral ermittelt.

Es wird dazu das Integral zwischen 0 und $E_1$ über die Intensität dN/dE berechnet und somit ein erster Farbparameter F1 festgelegt. Es wird die deponierte Energie in einem zweiten Energiebereich zwischen $E_1$ und $E_2$ ermittelt, indem das Integral zwischen $E_1$ und $E_2$ zur Bestimmung eines zweiten Farbparameters F2 berechnet wird. Schließlich erfolgt eine Integration zwischen $E_2$ und $E_3$ zur Berechnung des entsprechenden Integrals und der Ableitung des Farbparameters F3. Beispielsweise könnten die Energiebereiche zwischen 1 und 3 MeV, 3 und 5 MeV und oberhalb von 5 MeV liegen.

Für jedes der beispielsweise in der Figur 11 dargestellten Elemente ergibt sich ein charakteristisches Spektrum und somit auch eine charakteristische Kombination von Farbparametern F1, F2 und F3. Analog dem Farbsehen ergibt sich aus drei Energie- bzw. Frequenzbereichen, die beim menschlichen Farbsehen im Wesentlichen den drei Grundfarben Rot, Grün und Blau entsprechen, insgesamt ein farbiges Signal mit einem Farbeindruck. Es wird nun ein Farbeindruck aus dem gemessenen Spektrum durch die Kombination (F1, F2, F3) bestimmt.

In einem entsprechenden dreidimensionalen Farbenraum, der aus den Koordinaten F1, F2 und F3 aufgespannt wird, kann prinzipiell den zu detektierenden Elementen ein Vektor oder zumindest ein Volumen in dem Farbenraum zugeordnet werden. Führt nun eine gemessene bzw. berechnete Kombination von Farbparametern (F1, F2, F3) für ein Spektrum einer unbekannten Materialprobe zu einem Vektor (F1, F2, F3), der in ein solches Volumen zeigt, wird ein gesuchtes Element erkannt. Damit kann trotz der eher geringen Energieauflösung des erfindungsgemäßen Detektors bei genügend hoher Zählrate eine Farbanalyse des Spektrums erfolgen und somit das Material der zum Beispiel mit Neutronen aktivierten Materialprobe erkannt werden.

Möglich ist daher neben der Richtungsinformation das Bestimmen einer "Farbinformation", die zu einer Elementeanalyse des untersuchten Materials verwendet wird. Durch die schichtweise Ausführung des erfindungsgemäßen Detektorelementes ergibt sich bei nicht-frontaler Gammaeinstrahlung eine zu kleineren Signalen führende Farbverschiebung. Im Falle der Stickstoffdetektierung ist dies besonders vorteilhaft. Da für Stickstofflinien die Hochenergieanteile dominieren, hebt sich das Stickstoffsignal im gemessenen Spektrum besonders deutlich von den übrigen Elementen ab, wenn der Detektor mit seiner Vorzugsrichtung auf das Suchobjekt bzw. die Materialprobe zeigt.

Bei einem Einsatz des Verfahrens und der Detektoranordnung zum Aufspüren von Landminen ergeben sich die folgenden in der Figur 13 dargestellten Verfahrensschritte. In einem ersten Schritt S1 wird mittels einer Neutronenquelle das zu untersuchende Material, beispielsweise ein Bodenbereich, mit Neutronen bestrahlt, was zu Kernreaktionen in dem Material führt. Unter einem eingestellten Winkel der Vorzugsrichtung des Detektorelementes bezüglich des zu untersuchenden Bodenbereichs wird die in dem Szintillatormaterial deponierte Energie aufgenommen und gemäß der Gleichungen 4 und 6 ein Richtungsparameter im Schritt S2 bestimmt. Dies erfolgt durch Schwenken des Detektorelementes unter mehreren veränderten Einstrahlungswinkeln $\alpha$ bzw. Schwenkwinkel (Schritt S21). Ein Maximum des Richtungsparameters r zeigt in der Regel an, dass die Vorzugsachse oder Richtung des Detektorelementes auf die Strahlungsquelle deutet. Somit wird zunächst eine Richtung erkannt (Schritt S3). Alternativ werden in den Schritten S2 und S21 die jeweiligen Hoch- und Niedrigenergieanteile der Spektren bei verschiedenen Schwenkwinkeln ermittelt. Ein Vorzugs-Schwenkwinkel, unter dem der Hochenergieanteil des zugehörigen Spektrums gegenüber den bei den anderen Schwenkwinkeln aufgenommenen Spektren ein Maximum zeigt, liefert die Richtung der Strahlungsquelle in Bezug auf das Detektorelement.

In der Folge wird eine Farbanalyse im Schritt S4 durchgeführt, d. h. es werden mindestens drei Energiebereiche ausgewählt und die darin vorliegenden deponierten Energien im Szintillatormaterial des Detektorelementes als Farbparameter F1, F2, F3 berechnet. Aus diesen drei erhaltenen Farbparametern F1, F2, F3 kann beispielsweise durch Vergleichen mit bekannten Farbparameterkombinationen das Vorliegen von stickstoffhaltigen Materialien, insbesondere Sprengstoff, erkannt werden.

Dieselbe Abfolge von Verfahrensschritten bietet sich bei der Untersuchung von Gepäck- oder Frachtgütern an.

Als Neutronenquelle kommen beispielsweise Deuterium-Tritium-Generatoren oder radioaktive Systeme in Frage. Bei Neutronen-Generatoren wird eine Reaktion von t(d,n)$^4$He ausgenutzt, die im Wesentlichen eine isotrope Verteilung von Neutronen der Energie 14,4 MeV erzeugt. Für die Beschleunigung der Deuteronen werden allerdings Spannungen von 300 kV benötigt, die einen größeren Generator erfordern.

Als kompakte Neutronenquellen mit geringerer Quellstärke bieten sich Neutronenemitter wie $^{252}$Cf mit einer Halbwertszeit von 2,6 Jahren und einer Neutronenenergie von einigen MeV an. Es ist dabei auch die Verwendung von Americium-Beryllium-Präparaten möglich, wobei zur Steigerung der Ausbeute Am und Be pulverförmig vermischt werden. Präparate dieser Form liefern ebenfalls eine gleichmäßige isotrope Verteilung des Neutronenflusses. Bei einem Transport einer derartigen Neutronenquelle sind jedoch schwere Absorber zur Abschirmung notwendig.

Deshalb kann für einen transportablen Gebrauch bei der Minensuche eine abschaltbare Neutronenquelle verwendet werden, bei der die Alpha-Quelle z. B. $^{241}$Am und Beryllium-Target getrennt bleibt. Bei einer großflächig als Folie ausgebildeten Alpha-Quelle steht ein Beryllium-Target in geringem Abstand gegenüber. Alphateilchen, die das Beryllium-Target treffen, produzieren dabei ein breites Neutronenspektrum um 2,5 MeV hauptsächlich in Vorwärtsrichtung. Durch Vergrößerung des Abstandes zwischen dem Alphastrahler und dem Beryllium-Target oder durch Einbringen eines Absorbers kann die Neutronenproduktion unterbrochen werden. Damit ist auch ein gefahrenloser Transport ohne aufwändige Neutronenabschirmung möglich.

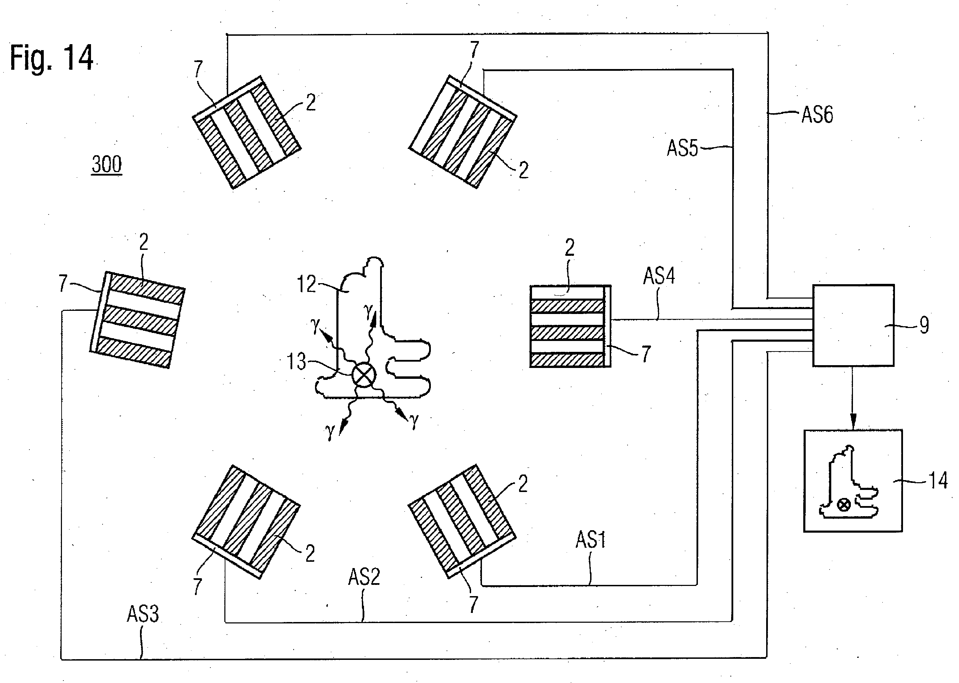

Eine erfindungsgemäße Detektoranordnung kann auch für tomographische Anwendungen eingesetzt werden. Die Figur 14 zeigt eine erfindungsgemäße Detektoranordnung 300, bei der mehrere erfindungsgemäße Detektorelemente 2 vorgesehen sind, die um eine Materialprobe 12 angeordnet sind. Beispielsweise kann es sich bei der Materialprobe 12 um ein Gepäckstück oder ein Frachtgut handeln, das eine lokalisierte Menge von Gamma strahlendem Material aufweist. Das Gamma strahlende Material als Gammastrahlungsquelle 13 kann beispielsweise durch Aktivierung mit Neutronen einer Sprengstoffkapsel erzeugt werden.

Die jeweiligen Detektorelemente bzw. die zugeordneten Photomultiplier 7 liefern jeweils Auswertesignale AS1-AS6 an eine elektronische Auswerteeinrichtung 9. Aus den verschiedenen Richtungsinformationen, die gemäß des Verfahrens ermittelt werden, kann die Position der Gamma-Strahlungsquelle 13 genau ermittelt werden. Eine Anzeigerichtung 14, die an die Auswerteeinrichtung 9 gekoppelt ist, liefert beispielsweise ein Bild der Gamma-Quelle, welche sich in der Materialprobe 12 aufhält.

Bei der Auswertung der Richtungsinformationen, die zumindest einen Winkel zwischen der jeweiligen Vorzugsrichtung der Detektorelemente 2 und der Strahlungsquelle 13 anzeigen, lassen sich mit üblichen bildgebenden Verfahren Abbildungen erstellen und anzeigen. Das Verfahren und die Detektoranordnung kann damit auch hervorragend zur Materialuntersuchung eingesetzt werden.

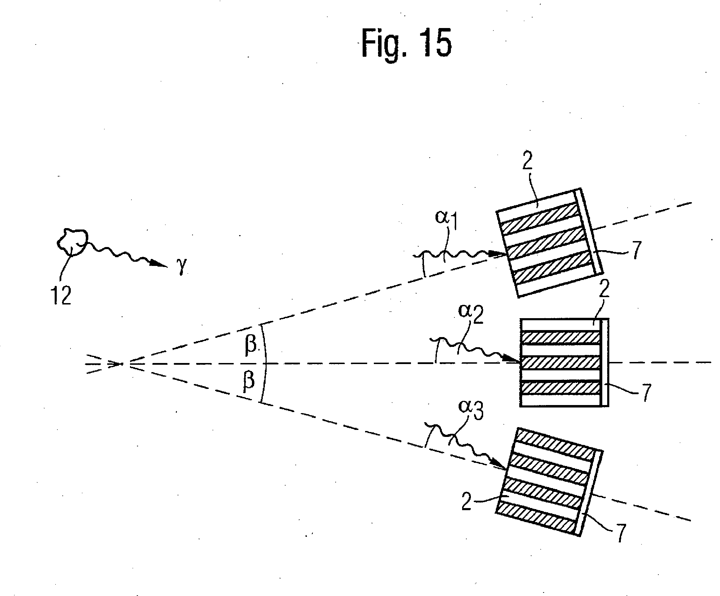

Die Figur 15 zeigt eine vierte Ausführungsform der Detektoranordnung, bei der mehrere Detektorelemente 2 jeweils um einen Winkel $\beta$, der einem Schwenkwinkel äquivalent ist, gedreht angeordnet sind. Jedes Detektorelement 2 nimmt über den jeweiligen Photomultiplier 7 Spektren der Compton-Elektronen im aktiven Detektormaterial auf. Bezüglich einer Gamma-Quelle 12 ergeben sich für jedes Detektorelement 2 ein jeweiliger Einstrahlungswinkel $\alpha_1$, $\alpha_2$, $\alpha_3$ hinsichtlich seiner Vorzugsrichtung, welche durch die gestrichelte Linie angegeben ist. Durch Vergleichen der unter verschiedenen Winkeln $\beta$ aufgenommenen im Detektormaterial deponierten Energien in den vorgegebenen Energiebereichen lässt sich die Richtung ermitteln, aus der die maximale hochenergetische Intensität kommt. Es werden also zum Beispiel die in einem ersten niedrigen Energiebereich deponierten Energien in den drei Detektorelementen gemessen und miteinander verglichen. Dann erfolgt ein ähnlicher Vergleich der deponierten Energien in einem zweiten, höheren Energiebereich. Die Gammastrahlungsquelle wird dann in der Vorzugsrichtung desjenigen Detektorelementes vermutet, für das der hochenergetische Anteil im aufgenommenen Spektrum am wenigsten zu niedrigeren Energien verschoben ist.

Die Erfindung ermöglicht somit eine richtungsabhängige Detektion von hochgenetischen Photonen, wobei die Kollimation in dem jeweiligen Detektormaterial erfolgt. Durch die Vermeidung von passiven Absorberschichten wird eine höhere Effizienz erreicht, als bei externer Kollimation durch Kollimationsbohrungen. Der Aufbau eines Kollimators für die eintreffenden Gamma-Quanten vor dem eigentlichen Detektor mit aktiven Detektormaterialien entfällt somit. Erfindungsgemäß ist keinerlei Kollimator vor dem Detektorelement vorgesehen, der die Transmission der Detektoranordnung herabsetzen würde. Ein fester Kollimator könnte zudem nur für einen bestimmten Energiebereich optimiert werden, während der erfindungsgemäße Aufbau flexibel verwendbar ist. Anstelle einer herkömmlichen Kollimierung der einfallenden Gamma-Quanten erfolgt eine Detektor-interne Kollimation der durch beispielsweise und/oder Paarbildung in den Detektormaterialien produzierten Elektronen. Es ist dabei auch leichter, also über eine kürzere Strecke, die von den einfallenden Photonen produzierten Elektronen in dem jeweiligen Detektormaterial (Festkörper) abzubremsen. Da keine Koinzidenzmessungen notwendig sind, ist zudem eine einfachere Signalverarbeitung möglich. In Kombination mit einer Neutronenquelle zur Anregung, insbesondere von stickstoffhaltigen Sprengstoffen, ist beispielsweise die Detektion von Landminen oder die Untersuchung von Gepäck- und Frachtstücken möglich.

Eine, der Farbanalyse ähnliche, Bestimmung einer Elementezusammensetzung der Materialprobe ist ebenso einfach möglich.

Die Herstellung der Detektorelemente kann mittels einfacher standardisierter Komponenten erfolgen. Die kleine Ausführungsform, insbesondere der Detektorelemente ohne externe Kollimationseinrichtungen ermöglicht den Einsatz als tragbare Einrichtungen sowie bei bildgebenden Anwendungen eine Auskleidung eines Detektionsraumes mit erfindungsgemäßen Detektorelementen.

Obwohl die vorliegende Erfindung anhand bevorzugter Ausführungsformen näher erläutert wurde, ist sie nicht darauf beschränkt, sondern vielfältig modifizierbar. Insbesondere sind die näher beschriebenen Schichtanordnungen veränderbar. Wesentlich ist die Durchdringung mehrerer Detektormaterialien bei Trajektorien von einfallender Gammastrahlung mit unterschiedlichem Winkel gegenüber der Vorzugsrichtung der Detektorelemente. Diese Vorzugsrichtung ergibt sich aus der jeweiligen Geometrie der verschiedenen Detektorbereiche aus aktivem Detektormaterial und absorbierendem Detektormaterial. Dabei sind neben den in den Figuren 1 und 7 gezeigten Geometrien selbstverständlich Abwandlungen möglich. Auch andere Vorrichtungen als die beispielhaft angegebene Lichtmesseinrichtung bzw. der Photomultiplier zum Auslesen der aktiven Detektormaterialien sind denkbar.

Die in der Beschreibung genannten Energiebereiche lassen sich ebenfalls ändern ohne die Trajektorien und Energiedepositionen der Compton-Elektronen grundlegend zu ändern. Selbstverständlich kann die Erfindung neben den genannten Beispielen zur Minendetektion und Gepäckkontrolle oder Tomographieanwendungen vielfältig eingesetzt werden.

Ausführungsformen einer Detektoranordnung zur winkelauflösenden Detektion von Strahlung mit mindestens einem Detektorelement, die nicht Teil der Erfindung ausmachen, umfassen:

1. Detektoranordnung (1) zur winkelauflösenden Detektion von Strahlung mit mindestens einem Detektorelement (2), welches eine Vorderseite (3) und eine Rückseite (4) aufweist, wobei:

a) ein Raum zwischen der Vorderseite (3) und der Rückseite (4) des Detektorelementes (2) von mehreren Bereichen (6) aus einem ersten Detektormaterial und mindestens einem Bereich (5) aus einem zweiten Detektormaterial ausgefüllt ist und jeder Bereich die Vorderseite (3) mit der Rückseite (4) des Detektorelementes (2) verbindet; und

b) wobei eine Energiedeposition in zumindest den Bereichen (6) aus dem ersten Detektormaterial in Abhängigkeit von einem Einstrahlungswinkel ($\alpha$) der Strahlung auf das Detektorelement (2) erfolgt.

2. Detektoranordnung (1) nach Ausführungsform 1,
dadurch gekennzeichnet,
dass die Bereiche (5, 6) als Schichten aus dem ersten Detektormaterial und dem zweiten Detektormaterial ausgebildet sind.

3. Detektoranordnung (1) nach Ausführungsform 2,
dadurch gekennzeichnet,
dass abwechselnd Schichten (5, 6) mit einer jeweiligen Schichtdicke ($d_{SZ}$, $d_{nsz}$) aus dem ersten Detektormaterial und dem zweiten Detektormaterial ausgebildet sind.

4. Detektoranordnung (1) nach mindestens einer der vorhergehenden Ausführungsformen,
dadurch gekennzeichnet,
dass zumindest die Bereiche aus dem ersten Detektormaterial aus einem Polyeder oder einem Zylinder mit einer Grundfläche und einer Höhe gebildet sind, wobei die Grundflächen an die Vorder- und Rückseite des Detektorelementes grenzen.

5. Detektoranordnung (1) nach Ausführungsform 4,
dadurch gekennzeichnet,
dass die Polyeder als Prismen ausgebildet sind.

6. Detektoranordnung (1) nach mindestens einer der vorhergehenden Ausführungsformen,
dadurch gekennzeichnet,
dass das erste Detektormaterial ein aktives Detektormaterial, insbesondere ein Szintillatormaterial aufweist.

7. Detektoranordnung (1) nach mindestens einer der vorhergehenden Ausführungsformen,
dadurch gekennzeichnet,
dass die Bereiche (5) aus dem zweiten Detektormaterial für das Detektorelement durchlaufende Strahlung oder Teilchen absorbierend wirken.

8. Detektoranordnung (1) nach Ausführungsform 7,
dadurch gekennzeichnet,
dass das zweite Detektormaterial Eisen, Luft, Blei und/oder Aluminium aufweist.

9. Detektoranordnung (1) nach mindestens einer der vorhergehenden Ausführungsformen,
dadurch gekennzeichnet,
dass das zweite Detektormaterial Szintillatormaterial aufweist.

10. Detektoranordnung (1) nach mindestens einer der vorhergehenden Ausführungsformen,
dadurch gekennzeichnet,
dass das erste und/oder zweite Detektormaterial organisches Material, insbesondere organisches Szintillatormaterial, aufweist.

11. Detektoranordnung (100) nach mindestens einer der vorhergehenden Ausführungsformen,
dadurch gekennzeichnet,
dass das Detektorelement (2) eine Lichtmesseinrichtung (8, 7) aufweist, welche rückseitig zumindest an die Bereiche (6) des ersten Detektormaterials gekoppelt ist und welche Szintillationslicht erfasst.

12. Detektoranordnung (100) nach Ausführungsform 10,
dadurch gekennzeichnet,
dass die Lichtmesseinrichtung (7, 8) integral das Szintillationslicht aller Bereiche (6) des ersten Detektormaterials erfasst.

13. Detektoranordnung (1) nach mindestens einer der vorhergehenden Ausführungsformen,
dadurch gekennzeichnet,
dass die Bereiche (5, 6) aus dem ersten und/oder zweiten Detektormaterial jeweils einen Halbleiterdetektor ausbilden, wobei elektrische Signale auslesbar sind.

14. Detektoranordnung (100, 200) nach mindestens einer der vorhergehenden Ausführungsformen,
dadurch gekennzeichnet,
dass das Detektorelement (2) um mindestens eine Schwenkachse schwenkbar angeordnet ist, wobei die Schwenkachse im Wesentlichen senkrecht zu einer Verbindung zwischen der Vorderseite (3) und der Rückseite (4) verläuft.

15. Detektoranordnung (1, 100, 200, 300) nach mindestens einer der vorhergehenden Ausführungsformen,
dadurch gekennzeichnet,
dass die Detektormaterialien auf Gammastrahlen, insbesondere in einem Energiebereich der Compton-Streuung und/oder energetisch höher, ansprechen.

16. Detektoranordnung (200, 300) nach mindestens einer der vorhergehenden Ausführungsformen,
dadurch gekennzeichnet,
dass eine Neutronenquelle (11) zum Einstrahlung von Neutronen auf eine Materialprobe (12) vorgesehen ist.

17. Detektoranordnung (200, 300) nach Ausführungsform 16,
dadurch gekennzeichnet,
dass die Neutronenquelle (11) mittels Alphastrahlung die Neutronen erzeugt.

18. Detektoranordnung (200, 300) nach Ausführungsform 16 oder 17,
dadurch gekennzeichnet,
dass die Neutronenquelle (11) mittels beschleunigter Protonen, Deuteronen, Helium-Ionen, Alphateilchen oder Tritonen, welche auf ein Target geschossen werden, die Neutronen erzeugt.

19. Detektoranordnung (200, 300) nach Ausführungsform 16,
dadurch gekennzeichnet,
dass die Neutronenquelle (11) einen piezoelektrischen Kristall aufweist.

20. Detektoranordnung (200, 300) nach mindesten einer der Ausführungsformen 16 bis 19
dadurch gekennzeichnet,
dass eine Neutronenproduktion durch die Neutronenquelle (11) steuerbar ist.

21. Detektoranordnung nach mindestens einer der vorhergehenden Ausführungsformen,
dadurch gekennzeichnet,
dass eine Anregungsstrahlungsquelle vorgesehen ist, die derart eine Materialprobe (12) bestrahlt, dass in der Materialprobe (12) Kernanregungen erzeugt werden.

22. Detektoranordnung (300) nach mindestens einer der vorhergehenden Ausführungsformen,
dadurch gekennzeichnet,
dass mehrere Detektorelemente (2) vorgesehen sind, wobei die Detektorelemente (2) derart um eine Position einer Materialprobe (12) angeordnet sind, dass die Vorderseiten (3) einen nicht verschwindenden Winkel zueinander aufweisen.

23. Detektoranordnung (100, 200, 300) nach mindestens einer der vorhergehenden Ausführungsformen,
dadurch gekennzeichnet,
dass eine Auswerteeinrichtung (9) vorgesehen ist, welche an die Bereiche (5, 6) und/oder die Lichtmesseinrichtung (7) gekoppelt ist und Signale auswertet.

24. Detektoranordnung (100, 200, 300) nach Ausführungsform 23,
dadurch gekennzeichnet,
dass die Auswerteeinrichtung (9) eine Verteilung der in den Detektormaterialien deponierten Energien erfasst.

**Patentansprüche**

1. Detektoranordnung (1) zur winkelauflösenden Detektion von Strahlung mit einer Auswerteeinrichtung (9) und mindestens einem Detektorelement (2), welches eine Vorderseite (3) und eine Rückseite (4) aufweist, wobei:

a) ein Raum zwischen der Vorderseite (3) und der Rückseite (4) des Detektorelementes (2) von mehreren Bereichen (6) aus einem ersten aktiven Detektormaterial und mindestens einem Bereich (5) aus einem zweiten Material, welches als aktives Detektormaterial oder als passives Material ausgeführt ist, ausgefüllt ist und jeder Bereich die Vorderseite (3) mit der Rückseite (4) des Detektorelementes (2) verbindet; und
b) wobei eine Energiedeposition in zumindest den Bereichen (6) aus dem ersten aktiven Detektormaterial in Abhängigkeit von einem Einstrahlungswinkel ($\alpha$) der Strahlung auf das Detektorelement (2) erfolgt; **dadurch gekennzeichnet, dass**
c) die Detektoranordnung (1) zumindest eine Auswerteeinrichtung (9) umfasst, die dazu eingerichtet ist, aus den in den aktives Detektormaterial aufweisenden Bereichen (5, 6) des Detektorelements (2) deponierten Energien sowie der Verteilung der in den aktives Detektormaterial aufweisenden Bereichen (5, 6) des Detektorelements (2) deponierten Energien den Einstrahlungswinkel ($\alpha$) zwischen der Strahlung auf das Detektorelement (2) und einer Vorzugsrichtung des Detektorelements (2) zu ermitteln.

2. Detektoranordnung (1) nach Anspruch 1,
   **dadurch gekennzeichnet,**
   **dass** die Bereiche (5, 6) als Schichten aus dem ersten aktiven Detektormaterial und dem zweiten Material, ausgebildet sind.

3. Detektoranordnung (1) nach Anspruch 2,
   **dadurch gekennzeichnet,**
   **dass** abwechselnd Schichten (5, 6) mit einer jeweiligen Schichtdicke ($d_{SZ}$, $d_{nsz}$) aus dem ersten aktiven Detektormaterial und dem zweiten Material ausgebildet sind.

4. Detektoranordnung (1) nach mindestens einem der vorhergehenden Ansprüche,
   **dadurch gekennzeichnet,**
   **dass** zumindest die Bereiche aus dem ersten aktiven Detektormaterial aus einem Polyeder oder einem Zylinder mit einer Grundfläche und einer Höhe gebildet sind, wobei die Grundflächen an die Vorder- und Rückseite des Detektorelementes grenzen.

5. Detektoranordnung (1) nach mindestens einem der vorhergehenden Ansprüche,
   **dadurch gekennzeichnet,**
   **dass** das erste aktive Detektormaterial ein Szintillatormaterial aufweist.

6. Detektoranordnung (1) nach mindestens einem der vorhergehenden Ansprüche,
   **dadurch gekennzeichnet,**
   **dass** die Bereiche (5) aus dem zweiten Materialfür das Detektorelement durchlaufende Strahlung oder Teilchen absorbierend wirken.

7. Detektoranordnung (1) nach mindestens einem der vorhergehenden Ansprüche,
   **dadurch gekennzeichnet,**
   **dass** das zweite Material Szintillatormaterial aufweist.

8. Detektoranordnung (1) nach mindestens einem der vorhergehenden Ansprüche,
   **dadurch gekennzeichnet,**
   **dass** das erste aktive Detektormaterial und/oder das zweite Material organisches Material, insbesondere organisches Szintillatormaterial, aufweist.

9. Detektoranordnung (100) nach mindestens einem der vorhergehenden Ansprüche,
   **dadurch gekennzeichnet,**
   **dass** das Detektorelement (2) eine Lichtmesseinrichtung (8, 7) aufweist, welche rückseitig zumindest an die Bereiche (6) des ersten aktiven Detektormaterials gekoppelt ist und welche Szintillationslicht erfasst.

10. Detektoranordnung (100) nach Anspruch 9,
    **dadurch gekennzeichnet,**
    **dass** die Lichtmesseinrichtung (7, 8) integral das Szintillationslicht aller Bereiche (6) des ersten aktiven Detektormaterials erfasst.

11. Detektoranordnung (1) nach mindestens einem der vorhergehenden Ansprüche,
    **dadurch gekennzeichnet,**
    **dass** die Bereiche (5, 6) aus dem ersten aktiven Detektormaterial und/oder dem zweiten Material jeweils einen Halbleiterdetektor ausbilden, wobei elektrische Signale auslesbar sind.

12. Detektoranordnung (100, 200) nach mindestens einem der vorhergehenden Ansprüche,
    **dadurch gekennzeichnet,**
    **dass** das Detektorelement (2) um mindestens eine Schwenkachse schwenkbar angeordnet ist, wobei die Schwenkachse im Wesentlichen senkrecht zu einer Verbindung zwischen der Vorderseite (3) und der Rückseite (4) verläuft.

13. Detektoranordnung (1, 100, 200, 300) nach mindestens einem der vorhergehenden Ansprüche,
    **dadurch gekennzeichnet,**

**dass** die aktiven Detektormaterialien auf Gammastrahlen, insbesondere in einem Energiebereich der Compton-Streuung und/oder energetisch höher, ansprechen.

14. Detektoranordnung (100, 200, 300) nach mindestens einem der vorhergehenden Ansprüche,
    **dadurch gekennzeichnet,**
    **dass** eine Anregungsstrahlungsquelle vorgesehen ist, die derart eine Materialprobe (12) bestrahlt, dass in der Materialprobe (12) Kernanregungen erzeugt werden.

15. Detektoranordnung (100, 200, 300) nach mindestens einem der vorhergehenden Ansprüche,
    **dadurch gekennzeichnet,**
    **dass** die Auswerteeinrichtung (9) an die Bereiche (5, 6) und/oder die Lichtmesseinrichtung (7) gekoppelt ist, und die Verteilung der in den Detektormaterialien deponierten Energien erfasst.

16. Detektoranordnung (300) nach mindestens einem der vorhergehenden Ansprüche,
    **gekennzeichnet durch**
    eine Mehrzahl an Detektorelementen (2), wobei zumindest ein erster Winkel und zumindest ein zweiter Winkel bestimmt werden, insbesondere zumindest ein Azimutwinkel und zumindest ein Polarwinkel.

**Claims**

1. Detector arrangement (1) for angle-resolving detection of radiation with an evaluation device (9) and with at least one detector element (2) having a front face (3) and a rear face (4), wherein:

   a) a space between the front face (3) and the rear face (4) of the detector element (2) is filled by several regions (6) of a first active detector material and by at least one region (5) of a second material designed as an active detector material or as a passive material, and each region connects the front face (3) to the rear face (4) of the detector element (2); and
   b) wherein an energy deposition takes place in at least the regions (6) of the first active detector material as a function of an irradiation angle ($\alpha$) of the radiation onto the detector element (2); **characterized in that**
   c) the detector arrangement (1) comprises at least one evaluation device (9) which is configured to determine, from the energies deposited in those regions (5, 6) of the detector element (2) containing active detector material and from the distribution of the energies deposited in those regions (5, 6) of the detector element (2) containing active detector material, the irradiation angle ($\alpha$) between the radiation onto the detector element and a preferential direction of the detector element (2).

2. Detector arrangement (1) according to claim 1,
   **characterized in**
   **that** the regions (5, 6) are designed as layers of the first active detector material and the second material.

3. Detector arrangement (1) according to claim 2,
   **characterized in**
   **that** layers (5, 6) with a respective layer thickness ($d_{sz}$, $d_{nsz}$) are formed alternately from the first active detector material and from the second material.

4. Detector arrangement (1) according to at least one of the preceding claims,
   **characterized in**
   **that** at least the regions of the first active detector material are formed from a polyhedron or a cylinder with a basic area and a height, wherein said basic areas adjoin the front and rear faces of the detector element.

5. Detector arrangement (1) according to at least one of the preceding claims,
   **characterized in**
   **that** the first active detector material contains a scintillator material.

6. Detector arrangement (1) according to at least one of the preceding claims,
   **characterized in**
   **that** the regions (5) of the second material have an absorbent effect for radiation or particles passing through the detector element.

**7.** Detector arrangement (1) according to at least one of the preceding claims, **characterized in that** the second material contains scintillator material.

**8.** Detector arrangement (1) according to at least one of the preceding claims, **characterized in that** the first active detector material and/or the second material contains organic material, in particular organic scintillator material.

**9.** Detector arrangement (100) according to at least one of the preceding claims, **characterized in that** the detector element (2) has a light measuring device (8, 7) which is connected at the rear at least to the regions (6) of the first active detector material and which records scintillation light.

**10.** Detector arrangement (100) according to claim 9, **characterized in that** the light measuring device (7, 8) integrally records the scintillation light of all regions (6) of the first active detector material.

**11.** Detector arrangement (1) according to at least one of the preceding claims, **characterized in that** the regions (5, 6) of the first active detector material and/or of the second material each form a semiconductor detector, wherein electric signals can be read out.

**12.** Detector arrangement (100, 200) according to at least one of the preceding claims, **characterized in that** the detector element (2) is arranged swivelable about at least one swivel axis, said swivel axis running substantially perpendicular to a connection between the front face (3) and the rear face (4).

**13.** Detector arrangement (1, 100, 200, 300) according to at least one of the preceding claims, **characterized in that** the active detector materials respond to gamma rays, in particular in an energy range with Compton scattering and/or of higher energy.

**14.** Detector arrangement (100, 200, 300) according to at least one of the preceding claims, **characterized in that** an excitation radiation source is provided which irradiates a material sample (12) in such a way that nuclear excitations are generated in said material sample (12).

**15.** Detector arrangement (100, 200, 300) according to at least one of the preceding claims, **characterized in that** the evaluation device (9) is linked to the regions (5, 6) and/or to the light measuring device (7), and records the distribution of the energies deposited in the detector materials.

**16.** Detector arrangement (300) according to at least one of the preceding claims, **characterized by** a plurality of detector elements (2), wherein at least one first angle and at least one second angle are determined, in particular at least one azimuth angle and at least one polar angle.

**Revendications**

**1.** Dispositif détecteur (1) destiné à la détection à résolution angulaire de rayonnement avec une unité d'évaluation (9) et au moins un élément détecteur (2), présentant une face avant (3) et une face arrière (4), sachant que :

a) un espace compris entre la face avant (3) et la face arrière (4) de l'élément détecteur (2) est rempli par plusieurs zones (6) composées d'un premier matériau détecteur actif et d'au moins une zone (5) composée d'un deuxième matériau conçu sous forme de matériau détecteur actif ou passif, et que chaque zone relie la face avant (3) et la face arrière (4) de l'élément détecteur (2); et

b) sachant qu'un dépôt d'énergie dans au moins les zones (6) constituées du premier matériau détecteur actif a lieu en fonction d'un angle d'incidence (α) du rayonnement sur l'élément détecteur (2); **caractérisé en ce que**

c) le dispositif détecteur (1) comprend au moins un dispositif d'évaluation (9) qui est conçu de manière à déterminer, à partir des énergies déposées dans les zones (5, 6) de l'élément détecteur (2) présentant du matériau détecteur actif, ainsi qu'à partir de la répartition des énergies déposées dans les zones (5, 6) de l'élément détecteur (2) présentant du matériau détecteur actif, l'angle d'incidence (α) entre le rayonnement sur l'élément détecteur et une direction préférentielle de l'élément détecteur (2).

2. Dispositif détecteur (1) selon la revendication 1,
**caractérisé en ce**
**que** les zones (5, 6) sont conçues sous forme de couches composées du premier matériau détecteur actif et du deuxième matériau.

3. Dispositif détecteur (1) selon la revendication 2,
**caractérisé en ce**
**que** des couches (5, 6) sont conçues en alternance respectivement d'une épaisseur ($d_{sz}$, $d_{nsz}$) de premier matériau détecteur actif et de deuxième matériau.

4. Dispositif détecteur (1) selon au moins l'une des revendications précédentes,
**caractérisé en ce**
**qu'**au moins les zones constituées du premier matériau détecteur actif sont formées à partir d'un polyèdre ou d'un cylindre avec une surface de base et une hauteur, sachant que les surfaces de base sont adjacentes à la face avant et à la face arrière de l'élément détecteur.

5. Dispositif détecteur (1) selon au moins l'une des revendications précédentes,
**caractérisé en ce**
**que** le premier matériau détecteur actif présente un scintillateur.

6. Dispositif détecteur (1) selon au moins l'une des revendications précédentes,
**caractérisé en ce**
**que** les zones (5) constituées du deuxième matériau ont un effet absorbant pour le rayonnement ou les particules traversant l'élément détecteur.

7. Dispositif détecteur (1) selon au moins l'une des revendications précédentes,
**caractérisé en ce**
**que** le deuxième matériau présente un scintillateur.

8. Dispositif détecteur (1) selon au moins l'une des revendications précédentes,
**caractérisé en ce**
**que** le premier matériau détecteur actif et/ou le deuxième matériau présente un matériau organique, en particulier un scintillateur organique.

9. Dispositif détecteur (100) selon au moins l'une des revendications précédentes,
**caractérisé en ce**
**que** l'élément détecteur (2) présente un dispositif de mesure de la lumière (8, 7), qui est couplé à l'arrière au moins aux zones (6) du premier matériau détecteur actif et qui détecte la lumière de scintillation.

10. Dispositif détecteur (100) selon la revendication 9,
**caractérisé en ce**
**que** le dispositif de mesure de la lumière (7, 8) détecte de manière intégrale la lumière de scintillation de toutes les zones (6) du premier matériau détecteur actif.

11. Dispositif détecteur (1) selon au moins l'une des revendications précédentes,
**caractérisé en ce**
**que** les zones (5, 6) constituées du premier matériau détecteur actif et/ou du deuxième matériau forment respectivement un semiconducteur, sachant que les signaux électriques sont lisibles.

**12.** Dispositif détecteur (100, 200) selon au moins l'une des revendications précédentes,
**caractérisé en ce**
**que** l'élément détecteur (2) est disposé autour d'au moins un axe de pivotement, sachant que l'axe de pivotement s'étend essentiellement perpendiculairement à une liaison entre la face avant (3) et la face arrière (4).

**13.** Dispositif détecteur (1, 100, 200, 300) selon au moins l'une des revendications précédentes,
**caractérisé en ce**
**que** les matériaux détecteurs actifs réagissent aux rayons gamma, en particulier dans une plage d'énergie de la dispersion de Compton et/ou d'un niveau énergétique supérieur.

**14.** Dispositif détecteur (100, 200, 300) selon au moins l'une des revendications précédentes,
**caractérisé en ce**
**qu'**est prévue une source de rayonnement d'excitation qui rayonne de telle sorte sur un échantillon de matériau (12) que des activations nucléaires se produisent dans l'échantillon de matériau (12).

**15.** Dispositif détecteur (100, 200, 300) selon au moins l'une des revendications précédentes,
**caractérisé en ce**
**que** le dispositif d'évaluation (9) est couplé aux zones (5, 6) et/ou au dispositif de mesure de la lumière (7), et détecte la distribution des énergies déposées dans les matériaux détecteurs.

**16.** Dispositif détecteur (300) selon au moins l'une des revendications précédentes,
**caractérisé par**
une pluralité d'éléments détecteurs (2), sachant qu'au moins un premier angle et au moins un deuxième angle sont déterminés, en particulier au moins un angle azimutal et au moins un angle polaire.

# Fig. 1

Fig. 2

Fig. 3a

EP 2 047 295 B1

# Fig. 3b

# Fig. 4

# Fig. 5

# Fig. 6

## Fig. 7a

## Fig. 7b

## Fig. 7c

## Fig. 7d

## Fig. 7e

Fig. 8

Fig. 9

α=0°

α=30°

α=60°

α=90°

Fig. 10

Fig. 11a

Fig. 11b

Fig. 11c

Fig. 11d

Fig. 11e

Fig. 11f

## Fig. 12

## Fig. 13

Fig. 14

300

AS6

AS5

AS4

7 2

12

γ γ

13 ⊗

γ

γ γ

AS1

AS2

AS3

7

9

14

EP 2 047 295 B1

38

# Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10318416 A1

- US 5880469 A

**In der Beschreibung aufgeführte Nicht-Patentliteratur**

- **G. NEBBIA ; J. GERL.** Detection of buried landmines and hidden explosives using neutron, X-ray and gamma-ray probes. *europhysics news,* Juli 2005, 119 ff

- *nature,* 28. April 2005, vol. 434, 1115-1117